# EUROPEAN PATENT APPLICATION

(11) **EP 1 398 968 A2**
(43) Date of publication of application: **17.03.2004**
(21) Application number: 03255131.9
(22) Date of filing: 19.08.2003
(51) Int. Cl.: H04N 7/16

(54) **Apparatus and method for providing information related to advertising content**

(30) Priority: 21.08.2002 JP 2002241156; 14.11.2002 JP 2002331276; 15.08.2003 JP 2003293687
(71) Applicant: Nippon Telegraph and Telephone Corporation, Tokyo 100-8116 (JP)
(72) Inventor: Anzai, Hiroki c/o NTT Intellect. Property Center, Musashino-shi Tokyo 180-8585 (JP); Watanabe, Tomoki c/o NTT Intellectual Prop. Center, Musashino-shi Tokyo 180-8585 (JP); Kishida, Katsumi c/o NTT Intell. Prop. Center, Musashino-shi Tokyo 180-8585 (JP)
(74) Representative: Rees, Alexander Ellison

(57) **Abstract**

A center terminal to be used in an information providing system for providing related information that is related to advertising content associated with video content is provided. The center terminal includes: a part for receiving user information, content information for identifying the video content and locating information for locating advertising content; a part for storing, for each video content, identification information of advertising content and locating information corresponding to the advertising content; a storing part for obtaining identification information of advertising content by using the content information and the locating information, and storing the identification information or related information on the advertising content; a sending part for sending the related information on the basis of the user information.

## Description

### BACKGROUND OF THE INVENTION

### 1. Field of the Invention

The present invention relates to technology for providing related information that is related to advertising content associated with video content.

### 2. Description of the Related Art

There are following conventional technologies for providing detailed information related to a portion of content.

The first technology is disclosed in "information providing apparatus" (Japanese laid-open patent application No.9-160852). In the technology, a receiving terminal for receiving broadcasted signals and a user terminal (computer) are combined so that the user can request, by an easy operation, detailed information on a program that the user is viewing. More particularly, the user terminal sends a pair of a channel number and a user request obtained time to an address server that provides an address of detailed information of the program. The address server converts the received pair into an address of the detailed information and provides the address to the user. In addition, the server can provide the address in response to a request of the user after a lapse of a time.

Next technology is disclosed in "system for reproducing AV information and reproducing method of the system" (Japanese laid-open patent application No.9-328596). In the technology, a mark (Web mark) is displayed if detailed information (Web page) can be provided while reproducing image content from a recording medium. The reproducing apparatus can obtain the detailed information when the user clicks the mark.

In "reproducing system and reproducing terminal apparatus" (Japanese laid-open patent application No.10-62724), a reproducing terminal reproduces a data file (music and video), and detailed information related to the data file is downloaded from an information server and the detailed information is displayed on the reproducing terminal. More particularly, the reproducing terminal sends identification information of the data file to the information center, and the information center sends an URL of the detailed information to the reproducing terminal on the basis of the received identification information.

However, there are following problems in the above-mentioned conventional technologies.

In the above-mentioned "information providing apparatus" (Japanese laid-open patent application No.9-160852), the system is assumed to be used only for broadcasting media. In addition, since the channel number and the time are used for detecting an operation indicating the detailed information request by the user, it is impossible to apply this system to package media.

As to the above-mentioned "system for reproducing AV information and reproducing method of the system" (Japanese laid-open patent application No.9-328596), the detailed information can be displayed only when the Web mark is displayed. Therefor, it is impossible to display the detailed information asynchronously at any timing and it is impossible to display the detailed information on an terminal other than the reproducing apparatus.

As to "reproducing system and reproducing terminal apparatus" (Japanese laid-open patent application No.10-62724), it is impossible to display detailed information only for reproduced content that the user is interested in. In addition, it is impossible to display the detailed information at desired timing.

In addition, according to the conventional technologies, although information that the user is interested in can be recorded, related information can not be provided without user's request. Thus, if the user forgets the fact that the user has recorded information, the recorded information can not be used effectively.

### SUMMARY OF THE INVENTION

An object of the present invention is to provide an information providing technique for providing, to a desired terminal at desired timing, information on advertising content in which the user is interested in while the user is viewing video content.

The above object is achieved by an information providing system for providing related information that is related to advertising content associated with video content, the information providing system comprising a user terminal and a center terminal, the user terminal including:
a part for obtaining user information for identifying a user;
a part for obtaining content information for identifying the video content;
a part for obtaining locating information for locating advertising content corresponding to input by the user;
a part for sending the user information, the content information and the locating information as mark information;
the center terminal including:
   an advertising information storing part for storing, for each video content, identification information of advertising content and locating information corresponding to the advertising content;
   a storing part for obtaining identification information of advertising content from the advertising information storing part by using the content information and the locating information included in the mark information, and storing the identification information or related information on the advertising content in which the stored identification information or related information is associated with the user information included in the mark information;
   a sending part for sending the related information on the basis of the user information.

According to the present invention, based on mark information sent from the user terminal of a user, the center terminal stores information related to advertising content that the user is interested in for the user. Thus, the user can obtain the information related to the advertising content at any timing by using desired terminal.

For example, the center terminal sends the related information to a viewing terminal in response to receiving a viewing request that includes user information from the viewing terminal, or the center terminal may send related information corresponding to a user to a viewing terminal of the user at a predetermined notification time.

The predetermined notification time may be a date and time that is specified by the user or a predetermined periodic date and time, or, if content on the advertising content is unscreened, the predetermined notification time is a date and time close to a release date of the content on the advertising content.

The user terminal may include a reproducing part for reproducing video content in a package medium or received via broadcasting. In this case, the locating information for locating advertising content is reproducing position information corresponding to the advertising content in the video content.

The center terminal may include a related information storing part for storing the related information in which the related information is associated with identification information of the advertising content;
wherein the center terminal obtains the related information from the related information storing part by using the identification information of the advertising content.

In addition, the user terminal may obtain the content information for identifying the video content from input by the user, from digital data embedded in the package medium, from other terminal, or from information included in broadcasted information.

The above-mentioned object can be also achieved by a center terminal to be used in an information providing system for providing related information that is related to advertising content associated with video content, the center terminal including:
a part for receiving user information for identifying a user, content information for identifying the video content and locating information for locating advertising content;
an advertising information storing part for storing, for each video content, identification information of advertising content and locating information corresponding to the advertising content;
a storing part for obtaining identification information of advertising content from the advertising information storing part by using the content information and the locating information included in the mark information, and storing the identification information or related information on the advertising content in which the stored identification information or related information is associated with the user information included in the mark information;
a sending part for sending the related information on the basis of the user information.

In addition, the above-object can be also achieved by a user terminal for providing related information that is related to advertising content associated with video content, the user terminal including:
a part for obtaining user information for identifying a user;
a part for obtaining content information for identifying the video content;
a part for obtaining locating information for locating advertising content corresponding to input by the user; and
a part for sending the user information, the content information and the locating information as mark information to the center terminal.

### BRIEF DESCRIPTION OF THE DRAWINGS

Other objects, features and advantages of the present invention will become more apparent from the following detailed description when read in conjunction with the accompanying drawings, in which:
Fig.1 is a schematic of a package media content detailed information providing system of the first embodiment of the present invention;
Fig.2 is a figure for explaining an overview of the operation of the system according to the first embodiment of the present invention;
Fig.3 shows a system configuration of the first embodiment of the present invention;
Fig.4 shows a flowchart showing the operation of the media reproducing apparatus according to the first embodiment of the present invention;
Fig.5 shows a flowchart of the operation of the center terminal according to the first embodiment of the present invention;
Fig.6 shows a flowchart of mark information storing process in the center terminal according to the first embodiment of the present invention;
Fig.7 shows an example of data stored in the advertising information storing part 150 according to the first embodiment of the present invention;
Fig.8 shows an example of data stored in the mark information storing part 140 in the center terminal according to the first embodiment of the present invention;
Fig.9 shows a flowchart showing the mark content information producing/sending process according to the first embodiment of the present invention;
Fig.10 shows an example of data stored in the content information management part 160 according to the first embodiment of the present invention;
Fig.11 is a flowchart showing the operation of the viewing terminal according to the first embodiment of the present invention;
Fig.12 is a sequence chart between the media reproducing apparatus and the center terminal according to the first embodiment of the present invention;
Fig.13 shows a system configuration according to the second embodiment of the present invention;
Fig.14 shows a flowchart showing the operation of the mobile terminal according to the second embodiment of the present invention;
Fig.15 shows a flowchart of the operation of the media reproducing apparatus according to the second embodiment of the present invention;
Fig.16 is a sequence chart between the mobile terminal and the media reproducing apparatus according to the second embodiment of the present invention;
Fig.17 shows a system configuration of the third embodiment of the present invention;
Fig.18 is a sequence chart between the media reproducing/viewing terminal and the center terminal according to the third embodiment of the present invention;
Fig.19 shows a system configuration of the fourth embodiment of the present invention;
Fig.20 shows a flowchart showing the operation of the mark terminal of the fourth embodiment;
Fig.21 shows a flowchart of the operation of the center terminal of the fourth embodiment of the present invention;
Fig.22 shows a sequence chart between the mark terminal and the center terminal according to the fourth embodiment of the present invention;
Fig.23 shows a schematic view of the system configuration of the fifth embodiment of the present invention;
Fig.24 shows an outline operation of the system according to the fifth embodiment of the present invention;
Fig.25 is a system configuration of the fifth embodiment of the present invention;
Fig.26 shows an example of data stored in the preview information management part in the center terminal according to the fifth embodiment of the present invention;
Fig.27 shows an example of the related information table 841 in the center terminal according to the fifth embodiment of the present invention;
Fig.28 shows an example of recorded data in the record part in the center terminal according to the fifth embodiment of the present invention;
Fig.29 shows a flowchart showing the operation of the terminal in showing location according to the fifth embodiment of the present invention;
Fig.30 is a first flowchart of the operation of the mobile terminal of the fifth embodiment of the present invention;
Fig.31 shows a first flowchart of the operation of the center terminal of the fifth embodiment of the present invention;
Fig.32 shows a second flowchart of the operation of the center terminal according to the fifth embodiment of the present invention;
Fig.33 is a second flowchart of the operation of the mobile terminal according to the fifth embodiment of the present invention;
Fig.34 is a sequence chart among the terminal in showing location, the mobile terminal and the center terminal according to the fifth embodiment of the present invention;
Fig.35 is a sequence chart between the mobile terminal and the center terminal for sending/receiving information on recorded content according to the fifth embodiment of the present invention;
Fig.36 shows a system configuration according to the sixth embodiment of the present invention;
Fig.37 shows an example of the data stored in the preview information management part in the center terminal according to the sixth embodiment of the present invention;
Fig.38 shows a system configuration of the seventh embodiment of the present invention;
Fig.39 shows an example of the data stored in the preview information management part in the center terminal according to the seventh embodiment of the present invention;
Fig.40 shows a system configuration of the eighth embodiment of the present invention.

### DETAILED DESCRIPTION OF THE PREFERRED EMBODIMENTS

In the following, embodiments of the present invention will be described with reference to figures.

### [First embodiment]

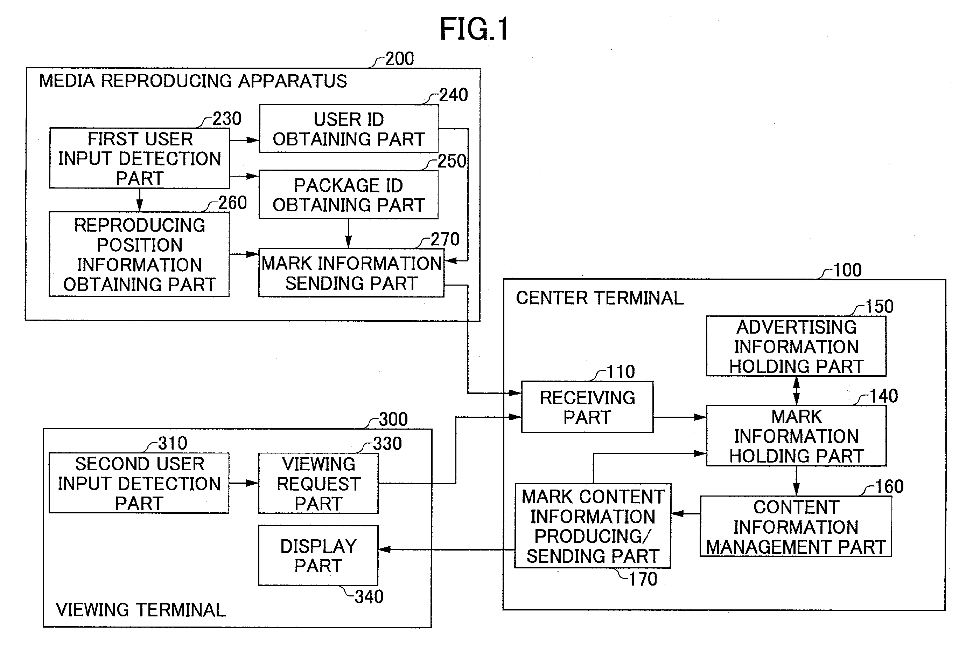

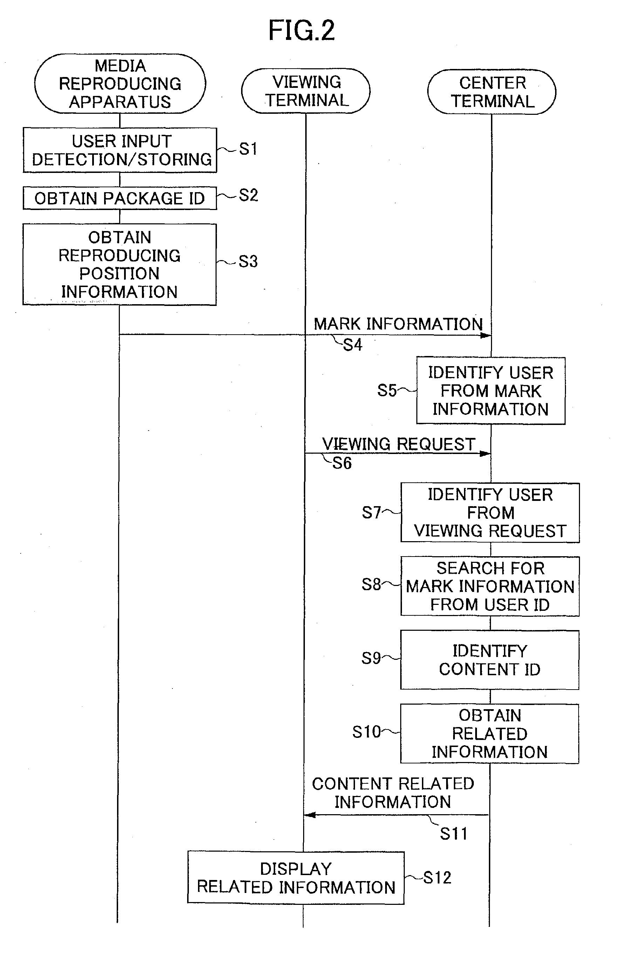

First, the principle of the first embodiment will be described with reference to Figs. 1 and 2. Fig.1 is a schematic of a package media content detailed information providing system of the first embodiment. The "package medium" is a recording medium such as an optical magnetic disk or a magnetic tape that stores content such as video, music and games and is provided for sale or rental.

"Content", as referred to in accordance with the present invention, is understood by one skilled in the art as being information that is intended for presentation to a user, either visually or audibly or as an audiovisual presentation.

The system is for obtaining detailed information of the content in the package medium. The system includes a media reproducing apparatus 200, a viewing terminal 300 and a center terminal 100.

The media reproducing apparatus 200 includes a first user input detection part 230, a user ID obtaining part 240, a package ID obtaining part 250, a reproducing position information obtaining part 260, a mark information sending part 270. The first user input detection part 230 detects input from a user. The user ID obtaining part 240 obtains a user ID for the user. The package ID obtaining part 250 obtains a package ID from user input or from digital data embedded in the package medium. The reproducing position information obtaining part 260 obtains reproducing position information in response to user input for a portion of content that the user is interested in. The mark information sending part 270 sends the user ID, the package ID and the reproducing position information as mark information.

The center terminal includes a receiving part 110, an advertising information holding part 150, a mark information holding part 140, a content information management part 160 and a mark content information producing/sending part 170.

The receiving part 110 receives information from other apparatuses. The advertising information holding part 150 holds, for each package ID, reproducing interval information for advertising content that is included in the package medium and content IDs of advertising content in which each piece of the reproducing interval information is associated with the corresponding content ID. The mark information holding part 140 sends the received package ID and the reproducing position information to the advertising information holding part 150 to request for identifying content that the user is interested in, and stores the user ID and the content ID of the identified content by associating the user ID with the content ID. The content information management part 160 stores, for each content, information including title, rental fee, rental availability and reservation availability in which these pieces of information is associated with the content ID. The mark content information producing/sending part 170 identifies a content ID by referring to the mark information holding part on the basis of the user ID included in a viewing request from the receiving part 110, searches the content information management part 160 by using the content ID, and sends information related to the content ID to the source of the viewing request.

The viewing terminal 300 includes a second user input detection part 310, a viewing request part 330 and a display part 340. The second user input detection part 310 detects user input. The viewing request part 330 sends a viewing request including a user ID to the center terminal 100. The display part 340 displays a response from the center terminal 100.

Next, an overview of the operation of the system will be described with reference to a sequence chart shown in Fig.2.

The media reproducing apparatus 200 detects a user ID input by the user and stores the user ID in step 1, and obtains the package ID from an input of the user or from digital data embedded in the medium in step 2. Then, the media reproducing apparatus 200 reproduces content in the medium and obtains reproducing position information in the medium in response to input from the user in step 3, and sends the user ID, the package ID and the reproducing position information to the center terminal as mark information in step 4.

The center terminal identifies the user from the mark information and stores the mark information in step 5. When the center terminal receives a viewing request including the user ID from the viewing terminal 300 in step 6, the center terminal identifies the user from the user ID in step 7 and searches for package ID and reproducing position information corresponding to the user ID in step 8. Then, the center terminal specifies a content ID of the advertising content that the user is interested in by using the package ID and the reproducing position information in step 9. Then, the center terminal obtains information related to the content ID from a storing part that manages information related to content in step 10, then sends the information to the viewing terminal 200 in step 11. The viewing terminal 200 displays the response from the center terminal 100 in step 12.

In the following, the present embodiment will be described more particularly. Following description will be given taking a rental service of a package medium as an example.

The package medium in this embodiment is, for example, a rental video, a DVD and the like. The user is interested in an advertising content such as a preview that is associated with main content in the package medium. While the user is watching content in the package medium, if the user is interested in a portion of the content, information on the portion of the content is stored in the center terminal only by performing easy operation by using an remote controller and the like, so that the user can obtain detailed information on the advertising content (portion of the content) at any timing the user wants.

The detailed information may be the title and the rental fee, rental availability, or rental reservation availability for the advertised content at the time of the request by the user.

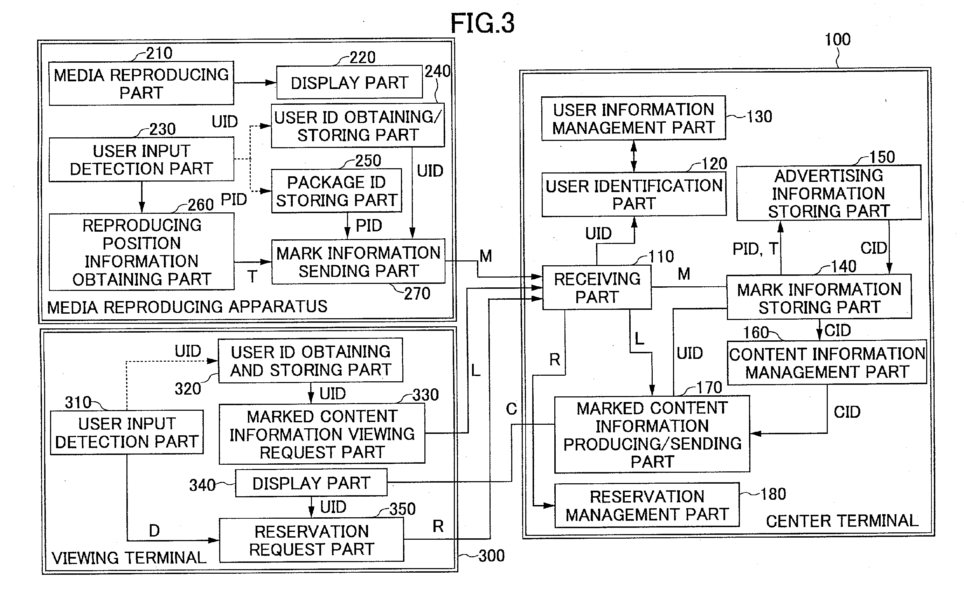

Fig.3 shows a system configuration of the first embodiment of the present invention.

The system of the first embodiment includes the media reproducing apparatus 200, the center terminal 100 and the viewing apparatus 300. The media reproducing apparatus 200 reproduces content in a medium such as a video and a DVD that the user borrowed. The center terminal stores information related to the advertising content that the user is interested in, and provides the information or receive reservation request of the advertised content according to a request by the user. The viewing terminal 300 is used for requesting the detailed information of the advertising content at any timing from the center terminal 100.

These terminals are connected by communication circuit such as the Internet. Although the media reproducing apparatus 200 and the viewing apparatus 300 are explained separately in this embodiment, these may be integrated to one terminal.

In the following, each apparatus shown in Fig.3 will be described.

The media reproducing apparatus 200 includes a media reproducing part 210, a display part 220, a user input detection part 230, a user ID obtaining/storing part 240, a package ID storing part 250, a reproducing position information obtaining part 260 and a mark information sending part 270.

The media reproducing part 210 has an insertion opening for inserting a medium such as a videocassette or DVD, and reproduces video data in the medium.

The display part 220 displays the reproduced video data, and displays an operation menu and information for requesting the user to check operation information.

The user input detection part 230 detects a user ID and a package ID input by the user, and detects user's input for indicating advertising content.

The user ID (UID) is assigned beforehand by the system for a user who registers in the system. The user ID is used for identifying the user. The package ID (PID) is assigned beforehand to a package medium that the user borrowed for example.

More particularly, the user ID (UID) can be input as character string including numerals and/or alphabets by using a remote controller or a keyboard. The user input detection part 230 can detect the character string. In addition, when the user ID is written on a member card of the user as barcode, an barcode reader as the user input detection part 230 can read the barcode as the user ID.

In the same way, the package ID can be input as character string that is written on the package, and the user input detection part 230 can read it. In addition, if the ID is written as barcode, the barcode reader can read it. In addition, the package ID may be embedded as digital data in the medium.

The user ID obtaining/storing part 240 obtains and stores the user ID (UID) detected by the user input detection part 230. The user ID obtaining/storing part 240 may stores user IDs (UIDs) for each media reproducing apparatus beforehand.

The package ID storing part 250 obtains and stores the package ID (PID) that is obtained by the user input detection part 230 or obtained from digital data embedded in the medium.

The reproducing position information obtaining part 260 obtains reproducing position information (T) when detecting user's input for interested advertising content. The reproducing position information (T) is, for example, a relative time in whole video content. The user's input may be performed by pushing a pause button of the remote controller.

The mark information sending part 270 produces mark information (M) that includes the user ID (UID), the package ID (PID) and the reproducing position information (T), and sends the mark information to the center terminal 100.

In this embodiment, although the components are included in one apparatus, all of a part of the user input detection part 230, the user ID obtaining/storing part 240, the package ID storing part 250, the reproducing position information obtaining part 260 and the mark information sending part 270 can be included in another apparatus or in a card. In such a case, a communication mean such as infrared ray or card reader becomes necessary between the another apparatus or the card and the media reproducing apparatus 300. As the another apparatus, a mobile terminal such as a mobile phone and PDA can be used. As the card, an IC card and a magnetic card can be used. An example will be described later in a second embodiment.

In addition, although one center terminal is shown in this embodiment, the number is not limited to one. A plurality of center terminal can be provided. For example, the center terminals may be provided for each package production company, or for each rental company. For example, it can be assumed that a connection destination is shown on the package, or on a user card issued by a rental company.

The center terminal 100 includes a receiving part 110, a user identification part 120, a user information management part 130, a mark information storing part 140, an advertising information storing part 150, a content information management part 160, a mark content information producing/sending part 170, and a reservation management part 180.

These components are not necessarily included in one apparatus, and may be included separate apparatuses. For example, if the company has a plurality of stores as branches, management of user information, rental availability and reservation availability management may be performed in each store, and storing mark information may be performed in one store.

The receiving part 110 receives the mark information (M) from the media reproducing apparatus 200, and receives viewing request (L) or reservation request (R) from the viewing terminal 300. The receiving part 110 sends a user ID (UID) included in the information or request to the user identification part 120. When the user is identified, the receiving part 110 requests the mark information storing part 140 to store the mark information (M) when receiving the mark information (M). When receiving the viewing request (L), the receiving part 110 requests the mark content information producing/sending part 170 to produce mark content information (C). When receiving the reservation request (R), the receiving part 110 requests the reservation management part 180 to reserve content.

The mark information storing part 140 requests the advertising information storing part 150 to identify content that the user is interested in by sending the package ID (PID) and the reproducing position information (T) to the advertising information storing part 150. Then, the mark information storing part 140 stores the user ID (UID) and a content ID (CID) of the identified content. The content ID (CID) is an ID that is assigned to each content to identify content uniquely.

The advertising information storing part 150 stores, for each package ID, content IDs and corresponding pieces of reproducing interval information.

The content information management part 160 stores, for each content ID, pieces of information such as title, rental fee, rental availability, reservation availability and the like.

The mark content information producing/sending part 170 requests stored data from the mark information storing part 140 by sending the user ID (UID) included in the viewing request (L) to the mark information storing part 140. Then, the mark content information producing/sending part 170 prepares content information (marked content information (C)) and sends it to the viewing terminal 300. The marked content information includes tile, rental fee, rental availability, reservation availability, content ID (CID), recommended content and the like for the marked content. The information may include advertising video that the user viewed when the content was marked.

The reservation management part 180 manages reservation by using the user ID (UID), the content ID (CID) and reservation date and time (D) that are included in the reservation request (R). The reservation date and time (D) are date and time that the user wants to reserve content. At this time, user authentication may be performed by using a password and the like.

The viewing terminal 300 includes a user input detection part 310, a user ID obtaining and storing part 320, a marked content information viewing request part 330, a display part 340 and a reservation request part 350.

The user input detection part 310 and the user ID obtaining/storing part 320 are the same as those of the media reproducing apparatus 200.

The marked content information viewing request part 330 produces the viewing request (L) including the user ID (UID) and sends the viewing request to the center terminal 100 for requesting information on the marked advertising content.

The display part 340 receives the marked content information from the center terminal 100 and displays it. The reservation request part 350 produces a reservation request (R) that includes reservation data and time, the content ID and the user ID (UID), and sends the reservation request (R) to the center terminal 100. The reservation request part 350 may sends a password input by the user to the center terminal 100 according to user authentication request by the center terminal 100.

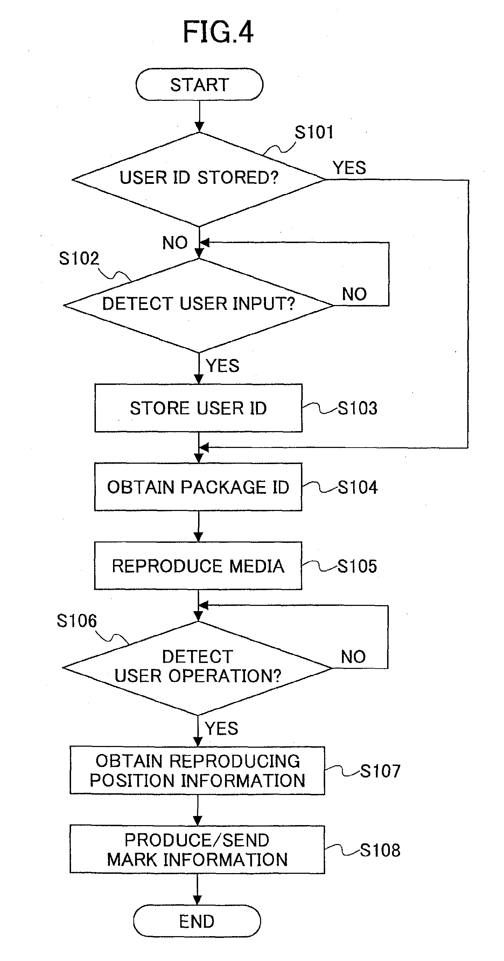

In the following, procedure for the process of this embodiment will be described with reference to Figs.4-8.

Fig.4 shows a flowchart showing the operation of the media reproducing apparatus in the first embodiment of the present invention.

When a video cassette or a DVD that the user rent is set in the media reproducing apparatus 200, the media reproducing apparatus 200 checks whether the user ID obtaining/storing part 240 has the user ID (UID). If it does not have the user ID (No in step 101), the user ID obtaining/storing part 240 detects the user ID input by the user (Yes in step 102), and stores the user ID (step 103). If it has the user ID, the process goes to the next step.

Next, the media reproducing apparatus 200 obtains the package ID (PID) in step 104 by detecting input by the user or by reading digital data in the media, and reproduces the media in step 105. Then, the media reproducing apparatus 200 detects input performed by the user for marking advertising content that the user is interested in, and obtains reproducing position information (T) at this point in step 107.

As mentioned before, for marking the advertising content, various easy method can be used, for example, pushing "pause button" by using a remote controller. Then, the media reproducing apparatus 200 produces mark information (M) by using the user ID (UID), the package ID (PID), and the reproducing position information (T), and sends the mark information (M) to the center terminal 100 in step 108. Next, the operation of the center terminal 100 will be described.

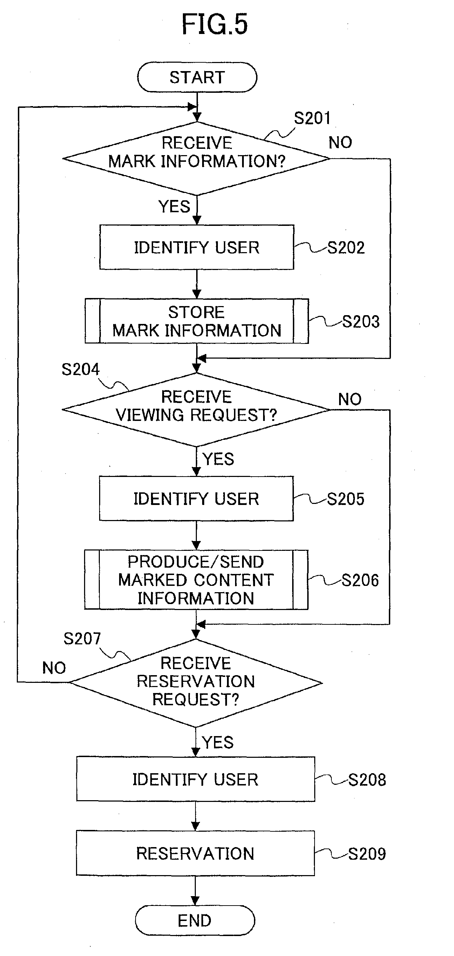

Fig.5 shows a flowchart of the operation of the center terminal according to the first embodiment of the present invention.

The center terminal waits for the mark information (M) from the media reproducing apparatus 200, viewing request (L) from the viewing terminal 300, or the reservation request. When the center terminal receives the mark information (M) (Yes in step 201), the center terminal identifies a user by using the user ID (UID) included in the mark information (M) in step 202. In the user identification process, the user identification part 120 that receives the user ID (UID) from the receiving part 110 inquires the user information management part whether the user ID is registered or not. If the user ID is not registered, the center terminal may sends information for causing the media reproducing apparatus 200 to display a screen for performing registration by the user.

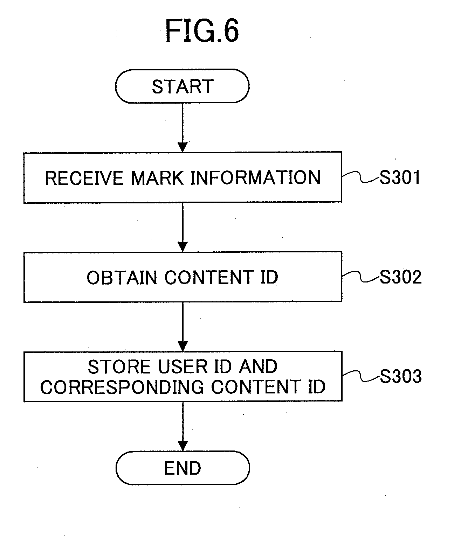

After that, the center terminal performs mark information storing process in step 203. Fig.6 shows a flowchart of this process.

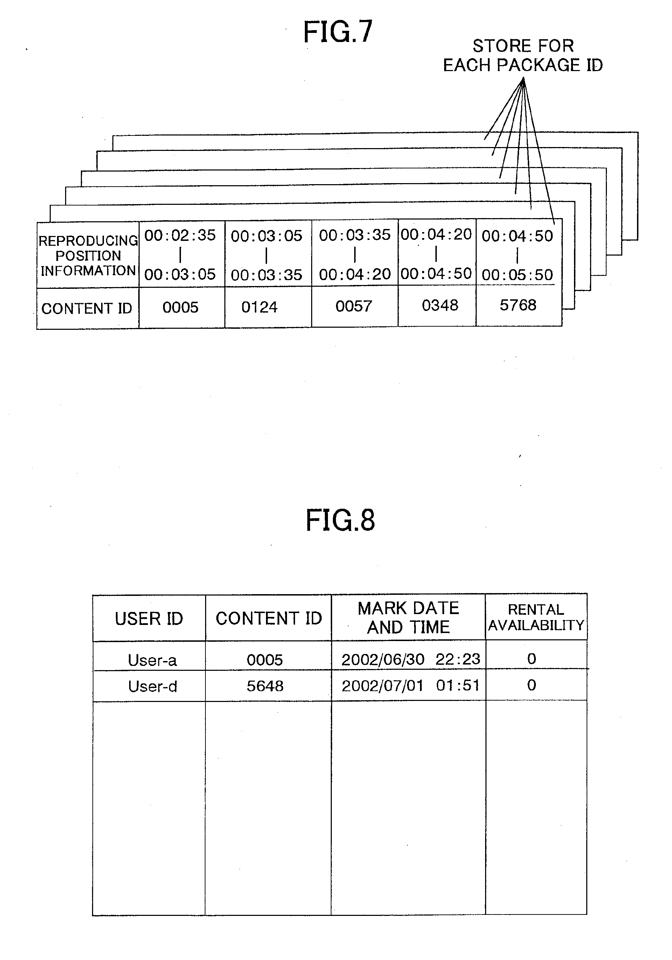

The mark information storing part 140 receives the mark information (M) from the receiving part 110 in step 301, and sends the package ID (PID) and the reproducing position information (T) included in the mark information (M) to the advertising information storing part 150. Then, the mark information storing part 140 obtains a content ID (CID) corresponding to the target advertising content in step 302. Fig.7 shows an example of data stored in the advertising information storing part 150. As shown in Fig.7, the advertising information storing part 150 stores reproducing positions and corresponding content IDs for each package ID (PID).

Then, the mark information storing part 140 stores the obtained content ID (CID) and the user ID (UID) in which the obtained content ID (CID) is associated with the user ID (UID) in step 303. At this time, the mark information storing part 140 may store time indicated by a clock in the system as the date and time when the marking is performed. In addition, a data area for storing a flag for determining whether a video corresponding to the content has been rent may be provided. Fig.8 shows an example of data stored in the mark information storing part 140. Although Fig.8 shows an example in which a user provide one mark, the mark information storing part 140 may manage a plurality of mark information for each user. In response to a viewing request, when content is identified by a user ID, a plurality of pieces of content may be identified for the user ID, in which the plurality of pieces of content are corresponds to the user ID in the mark information storing part 140. Thus, all of content IDs corresponding to the user ID may be displayed on the viewing terminal 300. In addition, some pieces of content may be selected. For example, by using the flag showing whether the video has been rent or not, a content ID that has been rent may not be displayed.

Next, the center terminal 100 waits for receiving a viewing request (L) from the viewing terminal. When the center terminal 100 receives the viewing request from the center terminal 100 in step 204, the center terminal 100 performs user identifying process by using the user ID (UID) included in the request (L) in step 205. This process is the same as that described before.

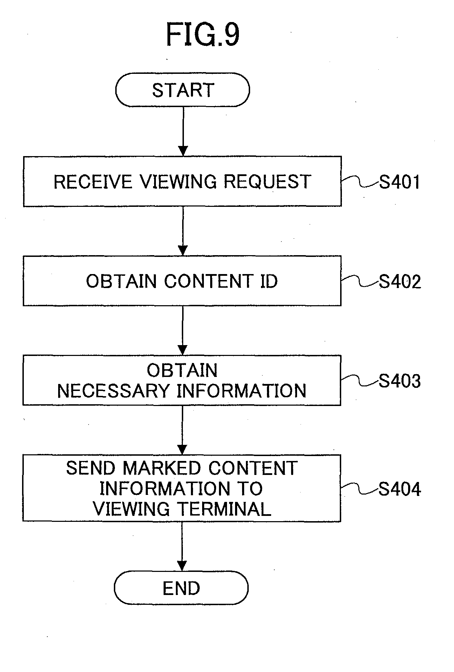

Then, the center terminal 100 produces marked content information (C) and sends it to the viewing terminal 300 in step 206. This process will be described with reference to Fig.9.

Fig.9 shows a flowchart showing the marked content information producing/sending process according to the first embodiment of the present invention.

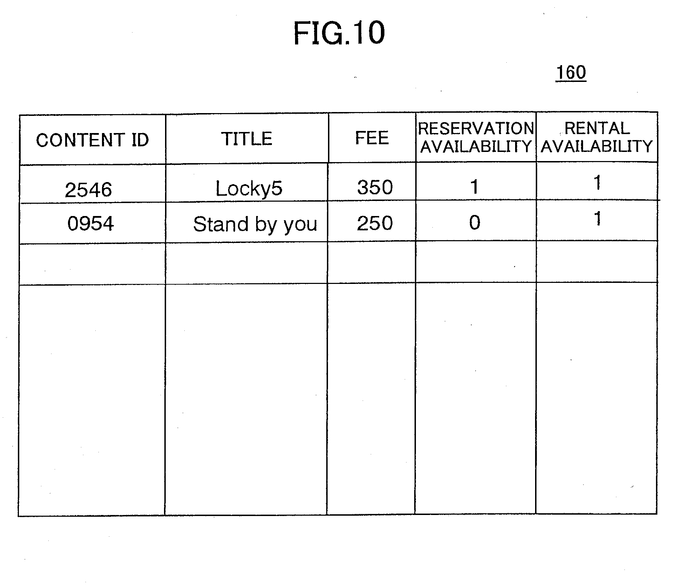

The marked content information producing/sending part 170 receives the viewing request (L) from the receiving part 110 in step 401, sends the user ID in the request to the mark information storing part 140. Then, the mark content information producing/sending part 170 identifies a content ID associated with the user ID (UID) in step 402. If flag data showing whether rental has been performed is provided, only content information for one that has not been rent may be obtained. The obtained content ID (CID) is sent to the content information management part to obtain necessary information in step 403. The information is, for example, title of content, rental fee, current reservation/rental availability and the like. Fig.10 shows an example of data stored in the content information management part 160. The data may additionally contain video image of advertising content and recommendation information for other content. The mark content information producing/sending part 170 produces marked content information (C) by using these pieces of information and the content ID (CID) and sends the marked content information to the viewing terminal 300 in step 404.

When the center terminal receives a reservation request (R) from the viewing terminal 300, the center terminal performs user identifying process by using the user ID included in the reservation request (R). Then, the center terminal performs reservation receipt process. In the user identification process, the center terminal may send information to request to input a password to the viewing terminal 300. In the reservation receipt process, the reservation management part 180 receives the reservation request (R) from the receiving part 110, and makes a reservation for rental of the content by using the user ID and the content ID (CID), reservation date and time, and reservation availability information, in which the user ID (UID) and the content ID (CID) and the reservation date and time (D) are included in the reservation request (R), and the reservation availability information is stored in the content information management part 160.

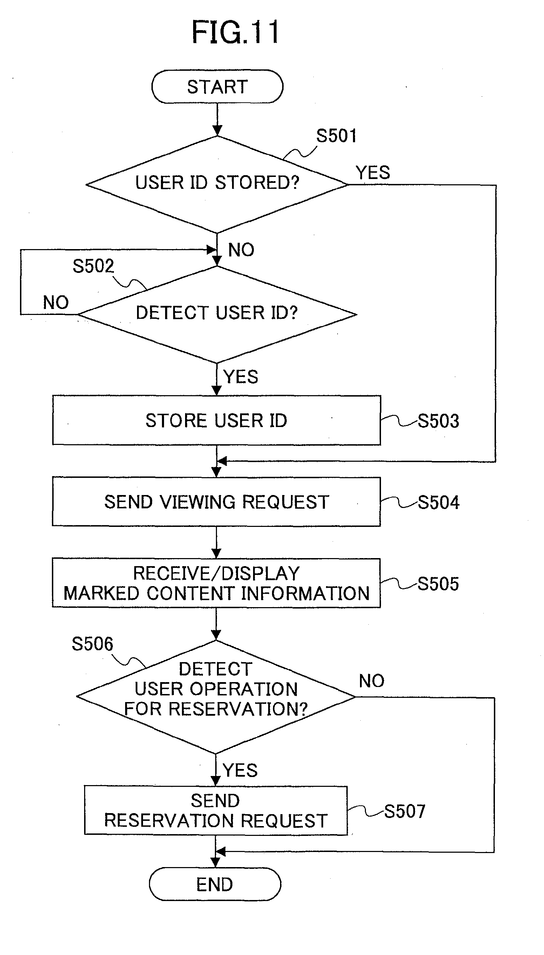

Fig.11 is a flowchart showing the operation of the viewing terminal according to the first embodiment of the present invention.

First, the viewing terminal obtains a user ID (UID). This process is the same as that in the media reproducing apparatus 200.

The viewing terminal produces a viewing request by using the user ID (UID), and sends the request to the center terminal in steps 503 and 504. In response to the request, the viewing terminal receives marked content information (C) from the center terminal and displays the information on the display part 340 in step 505. After that, if the viewing terminal detects user input for performing rental reservation in step 506, the viewing terminal produces a reservation request (R) by using the user ID, the content ID (CID) included in the marked content information (C), and the reservation date and time input (D) by the user, and sends the viewing request (R) to the center terminal 100 in step 507. In this step, the viewing terminal may receive, from the center terminal 100, a request for sending a password, and detect input from the user and send the input password to the center terminal 100. If the viewing terminal does not receive input from the user for performing rental reservation, the process ends.

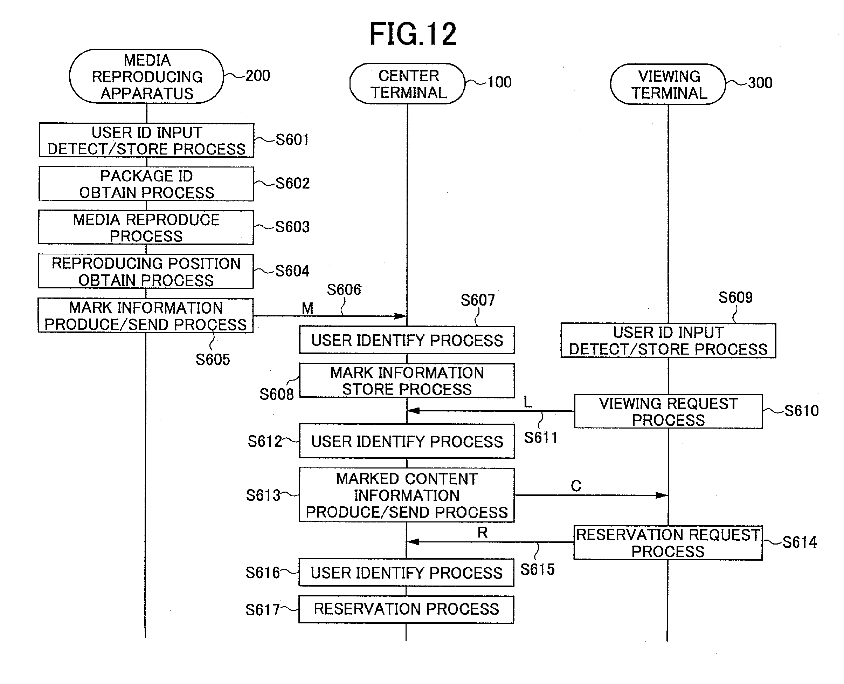

Fig.12 is a sequence chart between the media reproducing apparatus and the center terminal according to the first embodiment of the present invention.

The media reproducing apparatus 200 performs user ID input detecting/storing process in step 601. Then, the media reproducing apparatus 200 performs package ID obtaining process in step 602, and media reproducing process in step 603. Then, the media reproducing apparatus 200 detects user's input and performs reproducing position obtaining process in step 604, and sends mark information (M) to the center terminal 100 in step 606 by performing mark information producing/sending process in step 605.

When the center terminal 100 receives the mark information, the center terminal 100 performs user identification process in step 607. When the user is identified, the center terminal performs mark information storing process in step 608.

The viewing terminal 300 performs user ID input detecting/storing process in step 609, and produces a viewing request (L) by performing viewing request process in step 610 and sends the viewing request to the center terminal 100 in step 611.

When the center terminal 100 receives the viewing request, the center terminal 100 performs user identification process in step 612 and produces the marked content information (C) and sends the marked content information (C) to the viewing terminal 300 in step 613.

The viewing terminal 300 receives the marked content information (C) and displays it. For performing rental reservation for the content displayed on the terminal, the viewing terminal produces a reservation request (R) in step 614 and sends it to the center terminal 100 in step 615.

The center terminal 100 receives the reservation request, and performs user identification process in step 616 and reservation receipt process in step 617.

### [Second embodiment]

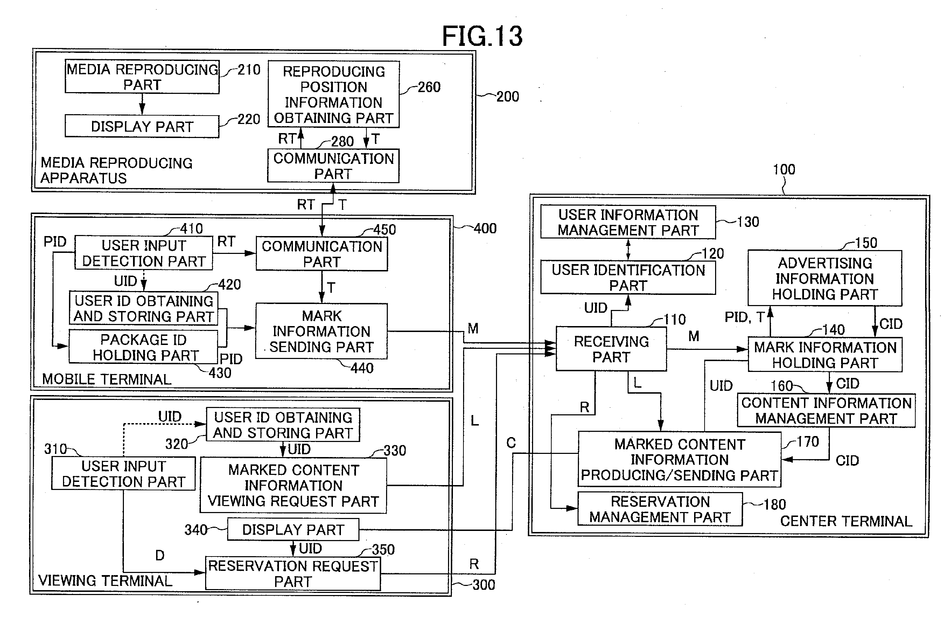

Fig.13 shows a system configuration according to the second embodiment of the present invention. In this embodiment, the user input detection part 230, the user ID obtaining/storing part 240, the package ID storing part 250 and the marked information sending part 270 that are included in the media reproducing apparatus 200 in the first embodiment are included in other terminal. In the second embodiment, these are included in a mobile terminal 400.

In Fig.13, same symbols as those in Fig.3 are assigned to corresponding elements. In addition, operation after the center terminal 100 receives the marked information from the mobile terminal 400 is the same as that of the first embodiment.

In the following, each component shown in Fig.13 will be described.

The media reproducing apparatus 200 includes a media reproducing part 210, a display part 220, a reproducing position information obtaining part 260 and a communication part 280.

The communication part 280 is used for performing data communication between the media reproducing apparatus 200 and the mobile terminal 400. The communication part 280 is, for example, a wireless communication means such as infrared rays and Bluetooth, a data communication means by using IC card, a barcode reader or the like.

When the media reproducing apparatus 200 receives a reproducing position information obtaining request (RT) from the mobile terminal 400, the media reproducing apparatus 200 passes the request to the reproducing position information obtaining part 260 to request for obtaining reproducing position information (T). When the communication part 280 receives the reproducing position information (T), the media reproducing apparatus 200 sends the information (T) to the mobile terminal 400. Other components are the same as those in the first embodiment.

The mobile terminal 400 includes a user input detection part 410, a user ID obtaining/storing part 420, a package ID storing part 430, a mark information sending part 440 and a communication part 450.

The package ID storing part 430 detects input by the user so as to identify a package ID (PID) and store it. Although it is assumed that the user inputs the package ID (PID) to identify the reproduced package in this embodiment, the media reproducing apparatus 200 may have a means for automatically identifying the package ID, or may obtain the package ID via the communication part 280.

When the user input detection part 410 detects input by the user for specifying advertising content that the user is interested in, the user input detection part 410 sends a reproducing position information obtaining request (RT) to the media reproducing apparatus 200 via the communication part 280.

When the communication part 450 receives the reproducing position information (T) from the media reproducing apparatus 200, the communication part 450 passes the information (T) to the mark information sending part 440.

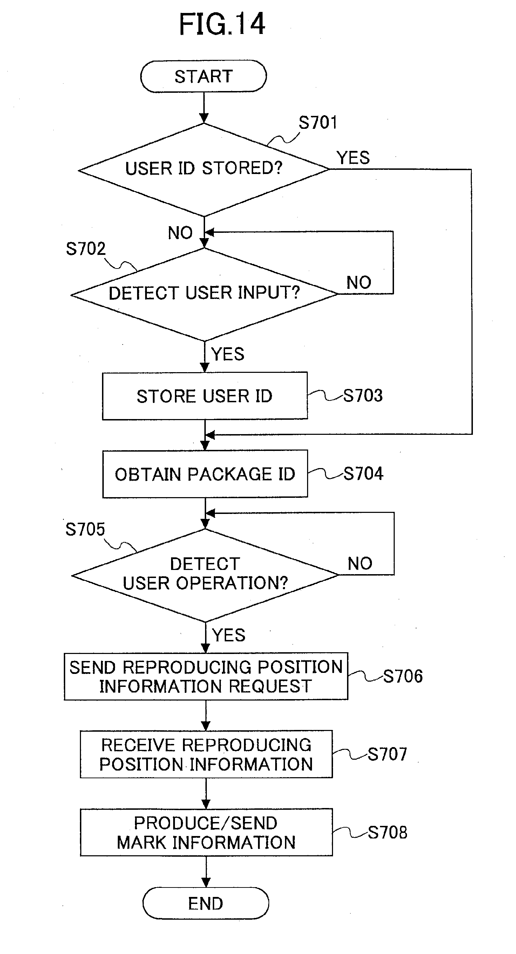

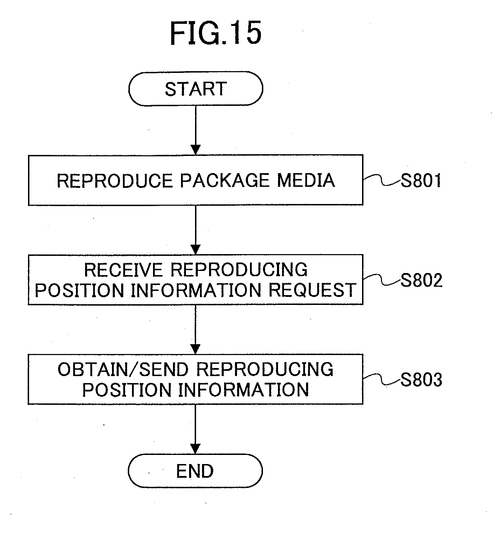

In the following, the process performed by the apparatuses will be described with reference to Figs.14 and 15.

Fig.14 shows a flowchart showing the operation of the mobile terminal according to the second embodiment of the present invention.

Processes from step 701 (obtaining user ID) to step 704 (obtaining package ID) are the same as those of the media reproducing apparatus of the first embodiment.

When the user input detection part 410 detects input by the user for specifying advertising content, the user input detection part 410 passes a reproducing position information obtaining request (RT) to the communication part 450. The communication part sends the request (RT) to the media reproducing apparatus 200 in steps 705 and 706. In response to sending the request, the communication part 450 receives reproducing position information (T) from the media reproducing apparatus 200 in step 707, and passes the information (T) to the mark information sending part 440. The mark information sending part 440 produces mark information (M) by using the user ID (UID), the package ID (PID) and reproducing position information (T), and sends the mark information (M) to the center terminal in step 708. Then, the process ends.

Fig.15 shows a flowchart of the operation of the media reproducing apparatus according to the second embodiment of the present invention.

First, the media reproducing part 210 reproduces package media in step 801, and displays reproduced video on the display part 220. When the communication part 280 receives reproducing position information obtaining request (RT) from the mobile terminal 400, the reproducing position information obtaining part 260 receives the request and obtains reproducing position information (T), and sends the information (T) to the mobile terminal 400 via the communication part 280 in step 803.

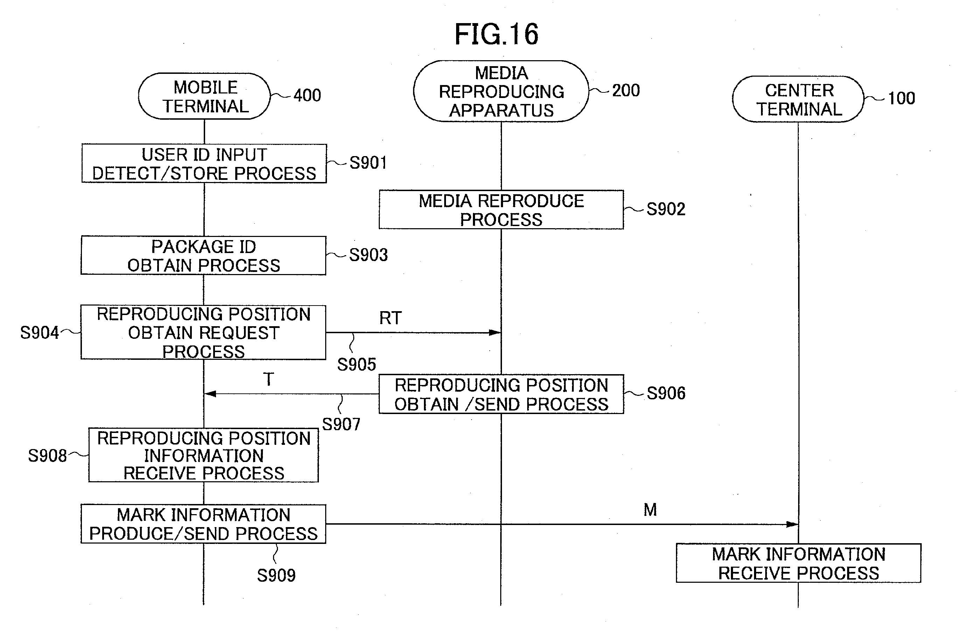

Fig.16 is a sequence chart between the mobile terminal and the media reproducing apparatus according to the second embodiment of the present invention.

First, the mobile terminal 400 performs user ID obtaining process in step 901. Next, the media reproducing apparatus 200 performs package media reproducing process in step 902. Then, the mobile terminal 400 performs package ID obtaining process in step 903, and reproducing position information obtaining request process in step 904. After that, the reproducing position information obtaining request (RT) is sent to the media reproducing apparatus 200 in step 905.

When the media reproducing apparatus 200 receives the request (RT), the media reproducing apparatus 200 performs reproducing position information obtaining process in step 906, and sends reproducing position information (T) to the mobile terminal 400 in step 907.

When the mobile terminal 400 receives the reproducing position information, the mobile terminal 400 performs mark information producing/sending process in step 909, and sends mark information (M) to the center terminal 100 in step 910. Sequences hereinafter are the same as those of the first embodiment.

### [Third embodiment]

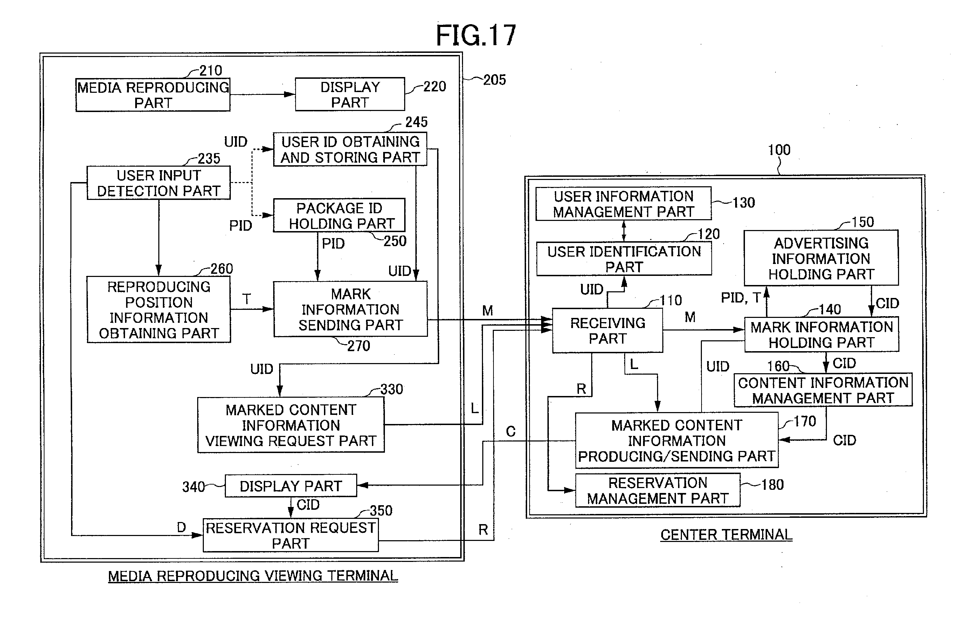

Next, the third embodiment of the present invention will be described. Fig.17 shows a system configuration of the third embodiment. In this embodiment, the media reproducing apparatus 200 and the viewing terminal 100 are integrated into an apparatus (media reproducing/viewing terminal 205). In Fig.17, same symbols as those in Fig.3 are assigned to corresponding elements. In addition, the operation of the center terminal 100 is the same as that of the first embodiment.

The user input detection part 235 in the media reproducing/viewing terminal 205 shown in Fig. 17 includes both capabilities of the user input detection part 230 in the media reproducing apparatus and the user input detection part 310 in the viewing terminal 300. The user ID obtaining/storing part 245 in the media reproducing/viewing terminal 205 shown in Fig.17 includes both capabilities of the user ID obtaining/storing part 240 in the media reproducing apparatus and the user ID obtaining/storing part 320 in the viewing terminal 300. Other components in the media reproducing/viewing terminal 205 are the same as corresponding components in the media reproducing apparatus 200 and the viewing terminal 300.

The operation of the media reproducing/viewing terminal 205 for reproducing media is the same as that shown in Fig.4, and the operation for viewing information is the same as that shown in Fig.11.

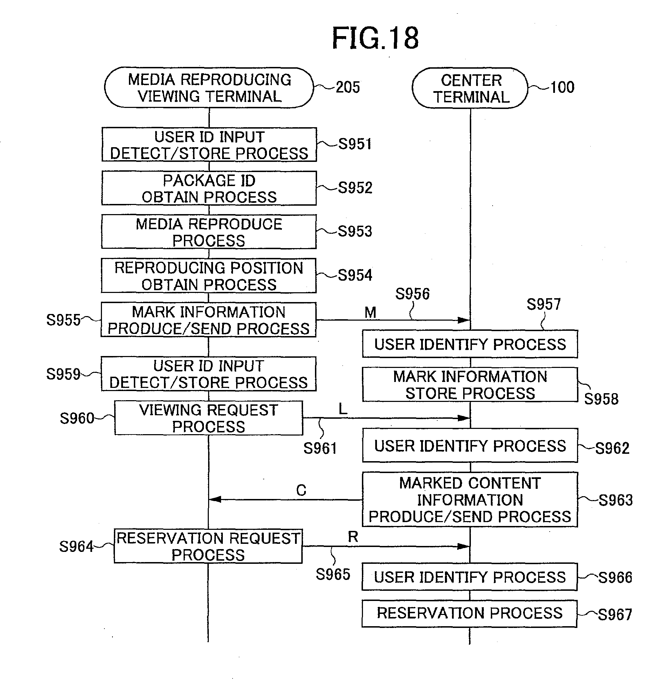

Fig.18 is a sequence chart between the media reproducing/viewing terminal and the center terminal according to the third embodiment of the present invention.

The media reproducing/viewing terminal 205 performs user ID input detecting/storing process in step 951. Then, the media reproducing/viewing terminal 205 performs package ID obtaining process in step 952, and media reproducing process in step 953. Then, the media reproducing/viewing terminal 205 detects user's input and performs reproducing position obtaining process in step 954, and sends mark information (M) to the center terminal 100 in step 956 by performing mark information producing/sending process in step 955.

When the center terminal 100 receives the mark information, the center terminal 100 performs user identification process in step 957. When the user is identified, the center terminal performs mark information storing process in step 958.

The media reproducing/viewing terminal 205 performs user ID input detecting/storing process in step 959, and produces a viewing request (L) by performing viewing request process in step 960 and sends the viewing request to the center terminal 100 in step 961.

When the center terminal 100 receives the viewing request, the center terminal 100 performs user identification process in step 962 and produces marked content information (C) and sends the marked content information (C) to the media reproducing/viewing terminal 205 in step 963.

The media reproducing/viewing terminal 205 receives the marked content information (C) and displays it. For performing rental reservation for the content displayed on the terminal, the viewing terminal produces a reservation request (R) in step 964 and sends it to the center terminal 100 in step 965.

The center terminal 100 receives the reservation request, and performs user identification process in step 966 and reservation receipt process in step 967.

### [Fourth embodiment]

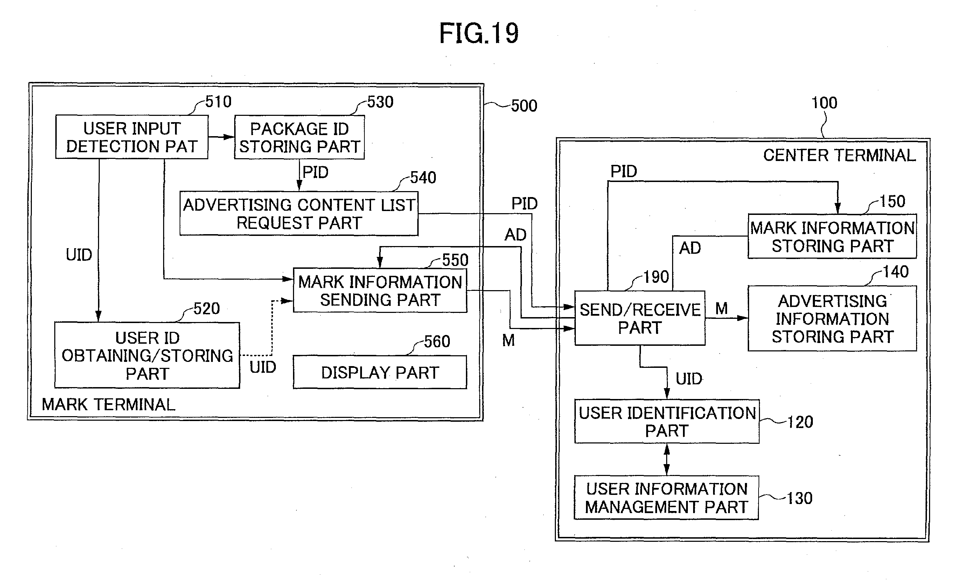

Fig.19 shows a system configuration of the fourth embodiment of the present invention. According to this embodiment, a list of advertising content included in a reproduced package is provided to the user according to a request by the user. Then, the user can select interested content from the list, and the selected content is marked. The operation after the center terminal 100 stores the mark information is the same as that of the second embodiment.

The mark terminal 500 corresponds to the media reproducing apparatus 200 in the first embodiment, and corresponds to the mobile terminal 400 of the second embodiment.

The mark terminal 500 includes a user input detection pat 510, a user ID obtaining/storing part 520, a package ID storing part 530, an advertising content list request part 540, a mark information sending part 550 and a display part 560. The mark terminal 500 does not necessarily include a media reproducing part.

The user input detection part 510 detects user's input indicating a package ID (PID), detects user's input for sending mark information or the like. The user input detection part 510 may be configured to read the package ID (PID) printed as numbers or barcode on the package by a user's operation. In addition, the user input detection part 510 may be configured to read digital data recorded in the media.

The package ID storing part 530 stores the obtained package ID (PID) and passes it to the advertising content list request part 540.

The advertising content list request part 540 sends the received package ID (PID) to the center terminal 100.

The mark information sending part 550 receives an advertising content list (AD) from the center terminal 100 and requests the display part to display the list. In this embodiment, the advertising content list (AD) includes all content IDs (CID) of advertising content in the package. Next, in response to input by the user for interested advertising content, the content ID (CID) corresponding to the advertising content is specified from the list. Then, mark information (M) is generated by using the user ID (UID) received from the user ID obtaining/storing part 520, and is sent to the center terminal 100.

Other configuration is the same as that of other embodiments.

The center terminal 100 includes a send/receive part 190, an advertising information storing part 150, a mark information storing part 140, a user identification part 120 and a user information management part 130.

The send/receive part 190 is used for sending/receiving data for the mark terminal 500.

When the advertising information storing part 150 receives a package ID (PID) from the send/receive part 190, the advertising information storing part 150 produces advertising content list (AD), and sends the list to the send/receive part 190. As shown in Fig.7, the advertising content list (AD) includes, for each package ID, all content IDs (CID) for advertising content.

The mark information storing part 140 receives the mark information from the send/receive part 190, and stores the user ID (UID) and the content ID included in the mark information in which the user ID (UID) is associated with the content ID.

The user identification part 120 and the user information management part 130 are the same as those in the first embodiment.

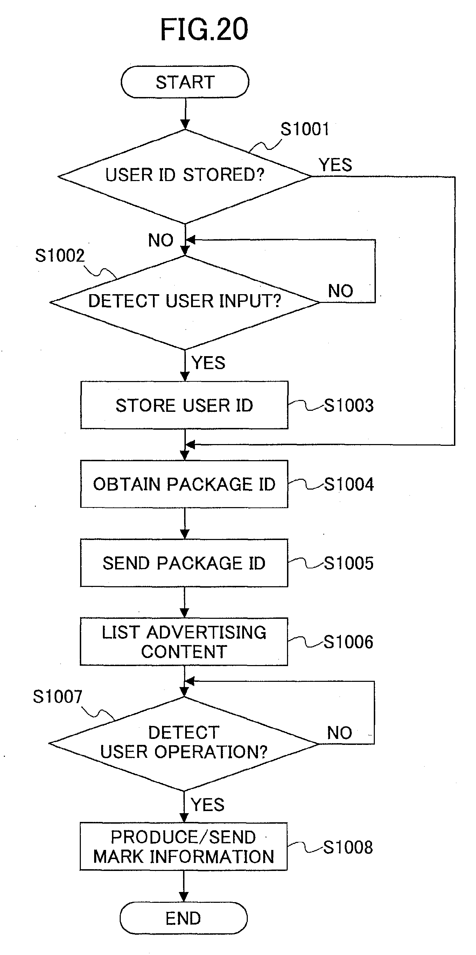

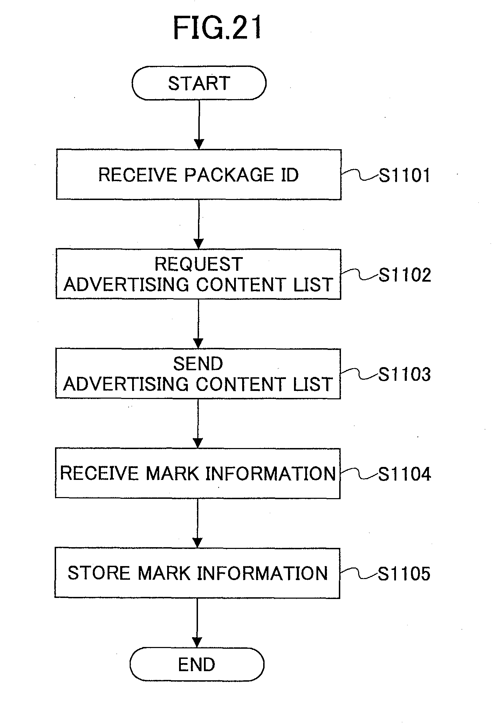

Next, operations of the terminals will be described with reference to Figs.20 and 21.

Fig.20 shows a flowchart showing the operation of the mark terminal of the fourth embodiment. In the operation, processes for obtaining the user ID and obtaining the package ID are the same as those of the media reproducing apparatus of the first embodiment.

The mark terminal detects user input in steps 1001 and 1002, and sends a package ID (PID) to the center terminal 100 to request an advertising content list (AD) in steps 1003-1005. When the mark terminal receives the advertising content list (AD), the list is displayed on the display part 560 in step 1006. When the mark terminal detects user's input for selecting content in step 1007, the mark terminal identifies the content ID (CID) of the selected content, and produces mark information by using the user ID (UID) and sends the mark information to the center terminal in step 1008.

Fig.21 shows a flowchart of the operation of the center terminal of the fourth embodiment.

When the center terminal receives, from the mark terminal 500, the package ID for requesting the advertising content list in step 1101, the send/receive part 190 sends the package ID to the advertising information storing part 150 in step 1102. The advertising information storing part 150 produces the advertising content list (AD), and sends the list to the mark terminal 500 via the send/receive part 190 in step 1103. When the center terminal receives the mark information (M). from the mark terminal 500 in step 1104, the user identification part 120 identifies the user by using the user ID (UID) that is included in the mark information. Then, the mark information storing part 140 stores the user ID and the content ID (CID) included in the mark information (M) in which the content ID (CID) is associated with the user ID in step 1105.

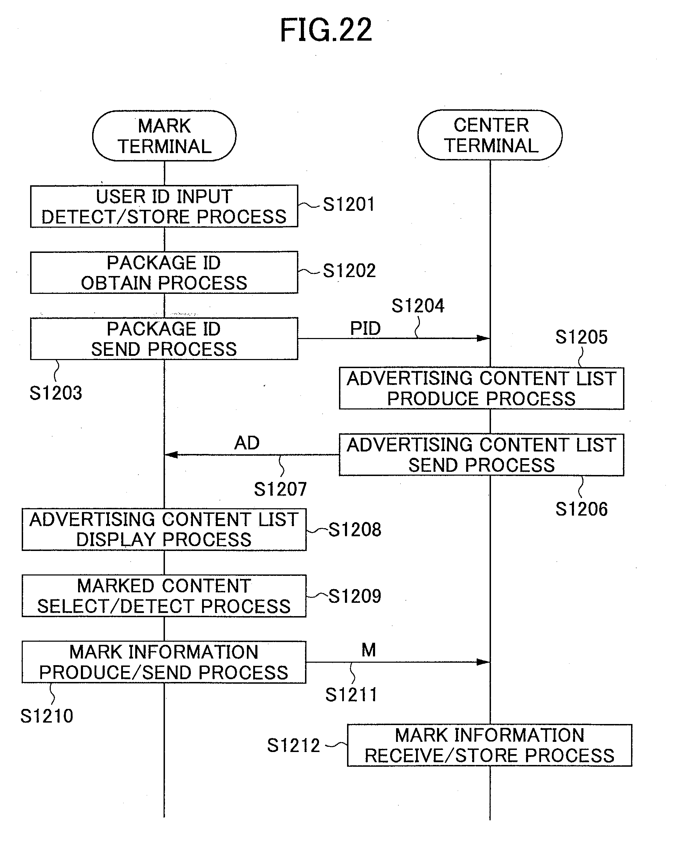

Fig.22 shows a sequence chart between the mark terminal and the center terminal according to the fourth embodiment of the present invention.

First, the mark terminal 500 performs user ID obtaining/storing process in step 1201, and package ID obtaining/storing process in step 1202. Then, the mark terminal 500 detects user's input and performs package ID sending process in step 1203. Then, the mark terminal 500 sends the package ID (PID) to the center terminal in step 1204.

The center terminal 100 receives the package ID (PID), and performs advertising content list producing process in step 1205 and advertising content sending process in step 1206. Then, the center terminal 100 sends the advertising content list (AD) to the mark terminal 500 in step 1207.

The mark terminal 500 receives the advertising content list (AD) and performs advertising content list displaying process in step 1208. Then, the mark terminal performs detection process for detecting content selected by the user in step 1209. After that, the mark terminal performs mark information producing/sending process in step 1210 and sends the mark information to the center terminal 100 in step 1211. The center terminal 100 receives the mark information and stores the mark information in step 1212. The sequences hereinafter are the same as those of the first embodiment.

As mentioned above, according to the first to fourth embodiments, a package media reproducing apparatus detects user's operation for specifying a part of reproduced content, so that detailed information on the specified part can be displayed on the reproducing apparatus or any apparatus the user wants at any timing the user wants.

That is, a user who views an advertisement of other content in rental media such as a video, DVD and the like can obtain detailed information on the content only by performing a simple operation, that is, by marking the content. At this time, additional information can be provided such as rental availability, reservation availability for specified date and time.

In addition, by providing the advertising content again to the user, the number of exposure of the content can be increased.

In addition, by using the mobile terminal as the viewing terminal, information of the marked content can be provided to the user regardless of time and location.

Further, by specifying content by selecting from a list instead of by using time of the user's operation, the media reproducing apparatus becomes unnecessary.

In addition, by adding a billing means, a response service can be provided such as a fee-based priority reservation service, a discount reservation service and the like. In addition, when advertising content for content for which rental has not been started is provided, the number of marks performed for the advertising content can be used as refinement of demand forecast.

### [Fifth embodiment]

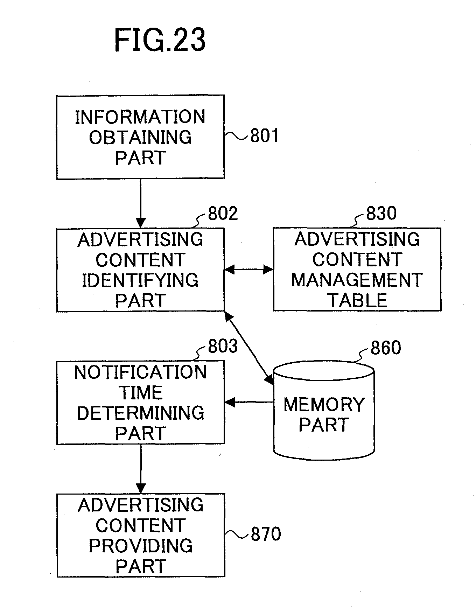

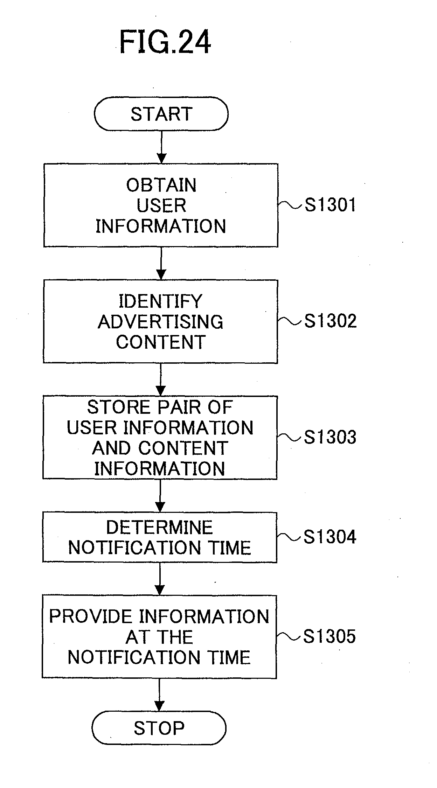

First, outline of the fifth embodiment will be described with reference to Figs.23 and 24. Fig.23 shows a schematic view of the fifth embodiment.

The advertising content providing system of the fifth embodiment is used for providing advertising content that is accompanied with by video content. The advertising content providing system includes an information providing part 801, an advertising content management table 830, an advertising content identifying part 802, a memory part 860, a notification time determining part 803, and an advertising content providing part 870.

The information obtaining part 801 obtains content information for identifying video content, information for identifying advertising content, and user information including user's address. The information for identifying advertising content may include a time when the advertising content is provided, or a time input by user's operation after a time elapses since the advertising content is provided. The advertising content management table 830 includes positions of advertising content in the video content. The advertising content identifying part 802 searches the advertising content management table 830 on the basis of the content information and the information for specifying the advertising content, so that advertising content identifying part 802 identifies advertising content. The memory part 860 stores the user information and information related to the identified advertising content. The notification time determining part 803 determines notification time to the user according to the information related to the advertising content stored in the memory part 860. The advertising content providing part 870 provides the information related to the advertising content at the notification time by using the user's address.

Fig.24 shows the outline operation of the system.

The system obtains the content information, the information for identifying the advertising content and the user information in step 1301.

Then, the table is searched so that the advertising content is identified in step 1302. Then, the user information and the information related to the identified advertising content are stored in step 1303. Then, the notification time is determined in step 1304. At the notification time, the information related to the advertising content is provided to the user in step 1305.

In the following, the fifth embodiment will be described in detail.

In this embodiment, an example in which the user watches a movie in a movie theater is taken. In this embodiment, a preview that is interested in by the user among previews that are shown in a movie is recorded in a center terminal. Then, information on a movie of the preview is sent to the user just before the movie is released or just after the movie is released. Accordingly, the user does not forget the release of the movie and the user can go to a movie theater.

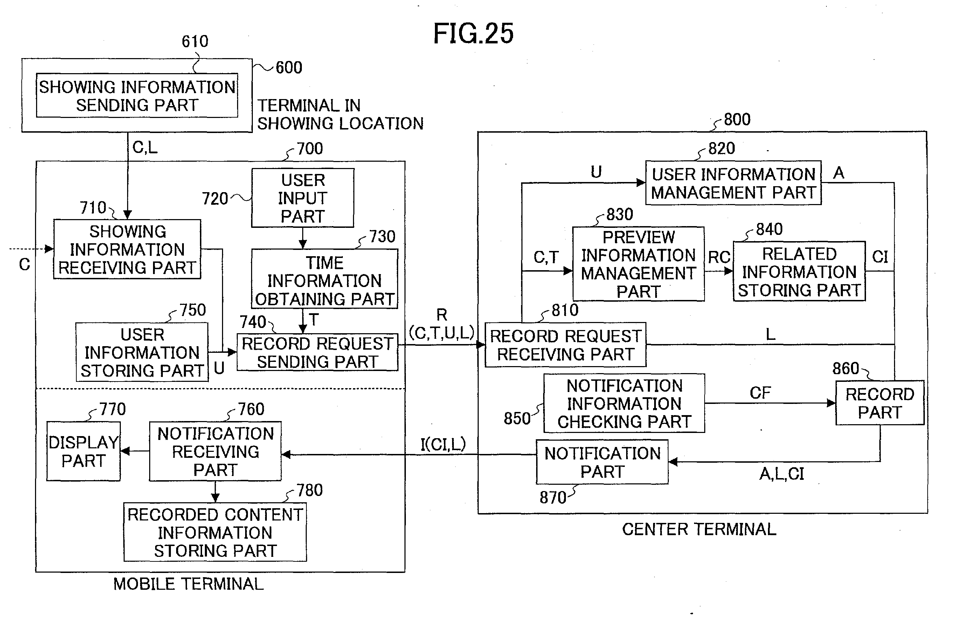

Fig.25 is a system configuration of the fifth embodiment of the present invention.

The system shown in Fig.25 includes a terminal in showing location 600, a mobile terminal 700 and a center terminal 800. The terminal in showing location 600 sends information of a movie to the mobile terminal 700. The user carries the mobile terminal 700 and operates the mobile terminal 700 while the user is watching the movie. The center terminal 800 record content that the user is interested in according to a request from the user and notifies the user of information related to the content on another occasion.

The terminal in showing location 600 is, for example, placed at the entrance of the movie theater.

The mobile terminal 700 and the center terminal are connected by a wireless communication circuit including the Internet. The mobile terminal 700 and the terminal in showing location 600 are connected by the wireless communication circuit, or, by near field communication by using infrared rays. In addition, reading barcode and the like is available between the mobile terminal 700 and the terminal in showing location 600.

In addition, in this embodiment, although a terminal for requesting to record and a terminal for requesting information at another time are the same, the terminals may be configured as one terminal.

The terminal in showing location 600 includes a showing information sending part 610 that sends showing content information (C) and showing location information (L) to the mobile terminal 700. The showing content information (C) is used for uniquely identifying a movie that the user is watching. The showing location information (L) is used for uniquely identifying a movie theater where the movie is shown. The showing location information may be assigned such that every movie theater is uniquely identified. In addition, under circumstances where a plurality of movie theaters are managed by a company or affiliated companies, the showing location information may be assigned such that each group of movie theaters is identified. As a sending means to the mobile terminal 700, a wireless communication means such as wireless Internet, wireless LAN, infrared rays, Bluetooth can be used. In addition, a means for reading information by using barcode or IC chip can be used. In this embodiment, although information is sent from the terminal in showing location 600 to the mobile terminal 700, the mobile terminal 700 may obtain showing information from a web site.

The mobile terminal 700 includes a showing information receiving part 710, a user input part 720, a time information obtaining part 730, a record request sending part 740, a user information storing part 750, a notification receiving part 760, a display part 770, and a recorded content information storing part 880.

The showing information receiving part 710 request showing information from the terminal in showing location 600, and receives and stores the showing content information (C) and the showing location information (L). These pieces of information may be received from a web site.

The user information storing part 750 stores user information (U) that was used when user registration is performed in the center terminal 800 according to user's operation. The user information can uniquely identify a user. The user information may be provided in the mobile terminal 700 beforehand, or may be provided from the center terminal 800.

The user input part 720 detects input from the user who is interested in a preview in a move (showing content), and requests the time information obtaining part 730 to obtain a time when the user input part 720 detects the input.

The time information obtaining part 730 includes a clock, and obtains a time according to the request by the user input part 720, and stores the time as the time information (T).

The record request sending part 740 receives the showing content information (C) and showing location information (L) from the showing information receiving part 710, receives the user information (U) from the user information storing part 750, and receives the time information (T) from the time obtaining part 730, so that the record request sending part 740 produces a record request including these pieces of information, and sends it to the center terminal 800. The timing of producing and sending the request may be just after the time information obtaining part 730 stores the time information, or may be at the time when user input for request information is detected at another time.

The notification information receiving part 760 receives notification information (I) from the center terminal 800. The notification information (I) includes recorded content information (RC) and the showing location information (L). The recorded content information (RC) is information on content for which the user requested the center terminal 800 to record information. The recorded content information (RC) will be described later in detail.

The display part 770 receives the recorded content information (RC) from the notification information receiving part 760, and displays it to the user.

The recorded content information storing part 780 receives the recorded content information (RC) and the showing location information (L) from the notification information receiving part 760 and stores these pieces of information.

By using these pieces of information, when the user watches a movie identified by the recorded content information (RC) at a movie theater identified by the showing location information (L), a service such as discount can be provided.

The center terminal 800 includes a record request receiving part 810, a user information management part 820, a preview information management part 830, a related information storing part 840, a notification information checking part 850, a record part 860 and a notification part 870.

The record request receiving part 810 receives a record request (R) from the mobile terminal 700, and requests the user information management part 820 to identify the user by sending the user information (U) included in the request (R) to the user information management part 820. In addition, the record request receiving part 810 requests the preview information management part 830 to identify content (recorded content information (RC)) that the user is interested in by sending the showing content information (C), time information (T) and the showing location information (L) to the preview information management part 830. In addition, record request receiving part 810 sends the showing location information (L) to the record part 860 to request to record the information.

The user information management part 820 registers user information according to the user's request beforehand, and stores notification address (A) with user information (U). The notification address (A) is used for sending information on recorded content at another time. The user information (U) may be provided to the terminal beforehand, or may be provided from the center terminal 800 at the time of registration. When the user information management part 820 receives the user information (U) from the record request receiving part 810, the user information management part 820 identifies a notification address (A) that is associated with the user information (U), and sends the notification address (A) to the record part 860.

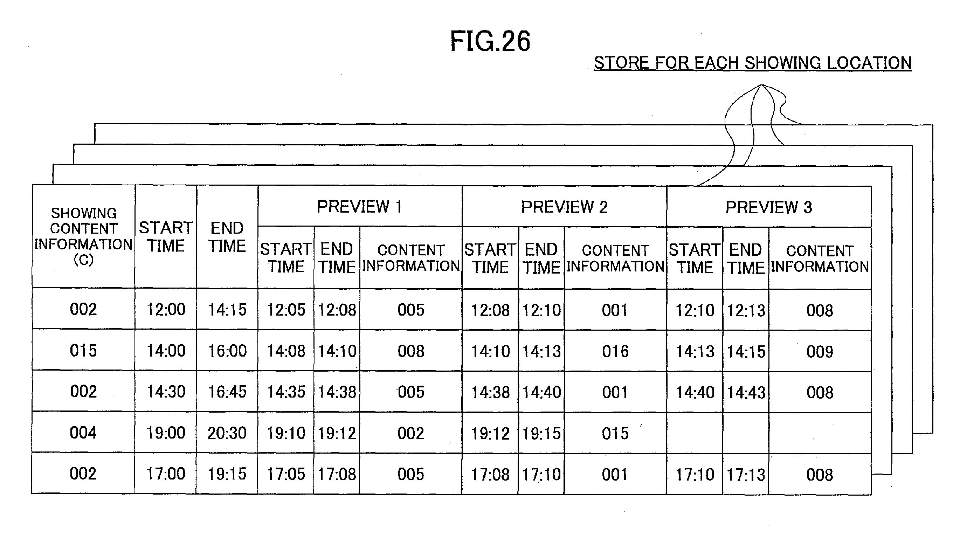

The preview information management part 830 stores, for each showing location, showing schedule and information on previews. Fig.26 shows an example of the data. For each piece of content information, the preview information management part 830 stores a start time and an end time of the main content and a start time and an end time of each preview corresponding to the main content, and content information of each preview. Data in the field of the main content information (C) and data in the preview content information are provided for identifying content uniquely. When the preview information management part 830 receives the showing content information (C), time information (T), the showing location information (L) from the record request receiving part 810, the preview information management part 830 identifies recorded content information (RC) by using the above-mentioned information, and sends the identifies recorded content information (RC) to the related information storing part 840.

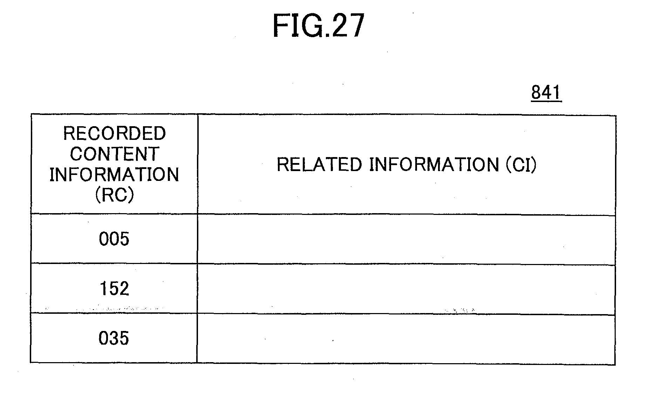

The related information storing part 840 includes a related information table 841 for identifying related information (CI) by using the recorded content information (RC). The related information may include at lease one of title, performer list, outline, static image and the like. When the related information storing part 840 receives the recorded content information (RC) from the preview information management part 830, the related information storing part 840 identifies related information (CI) corresponding to the recorded content information (RC) by referring to the related information table 841, and sends the related information (CI) to the record part 860. Fig. 27 shows an example of the related information table 841.

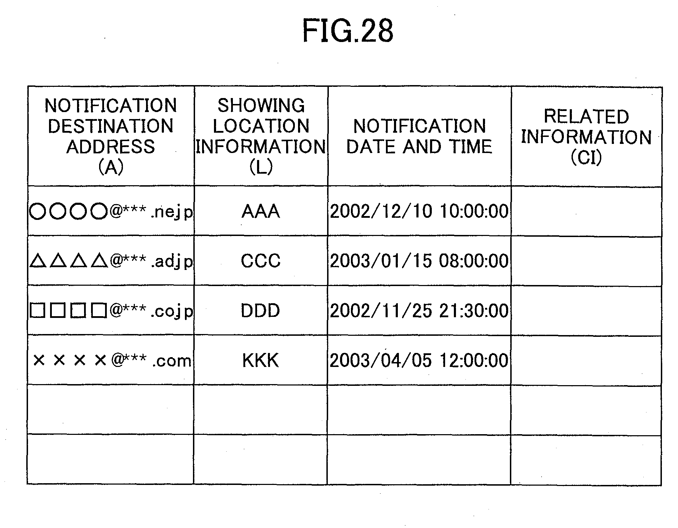

When the record part 860 is requested to record content information by receiving the showing location information (L) from the record request receiving part 810, the record part 860 receives the notification address (A) from the user information management part 820 and receives the related information from the related information storing part 840, and stores these pieces information. At this time, date and time when the related information (CI) will be sent to the user are specified. More specifically, for example, the date and time are specified to be near the release date of the content if the content has not been released. In addition, if the content can not be specified, an operator of the center terminal 800 may record the content information manually later. In addition, the center terminal may request the user to input date and time when the user wants to receive notification, such that the user can specify the desired date and time. Fig.28 shows an example of recorded data in the record part. The record part 860 periodically receives, from the notification information checking part 850, a notification information checking request (CF). When the record part has information to be sent at the time, the record part sends proper related information (CI), showing location information (L), and notification address (A) to the notification part 870 to request the notification part 870 to send these pieces of information. The notification information checking request (CF) is used by the notification information checking part 850 for periodically checking whether there is information to be sent in the record part 860, and the notification information checking request (CF) includes time information.

The notification information checking part 850 periodically produces the notification information checking request (CF) that includes time, and checks whether the record part 860 includes information to be sent.

The notification part 870 receives the related information and the showing location information (L) from the record part 860, and produces notification information (I) including these pieces of information. In addition, the notification part 870 receives the notification address (A) at the same time so as to identify the user terminal (mobile terminal 700) to send the notification information (I).

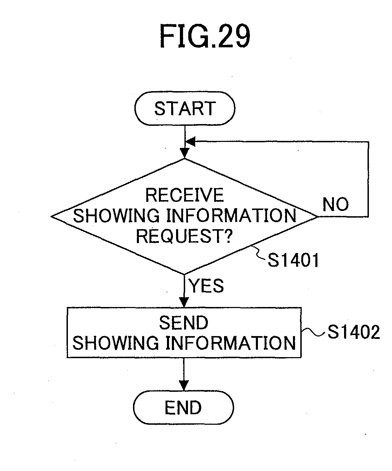

The operation of the above-mentioned system will be described. Fig.29 shows a flowchart showing the operation of the terminal in showing location 600 according to the fifth embodiment of the present invention.

The terminal in showing location 600 waits until it receives a showing information request from the mobile terminal 700 in step 1401. After receiving the request, the terminal in showing location 600 sends showing content information (C) and showing location information (L) to the mobile terminal 700 as showing information in step 1402.

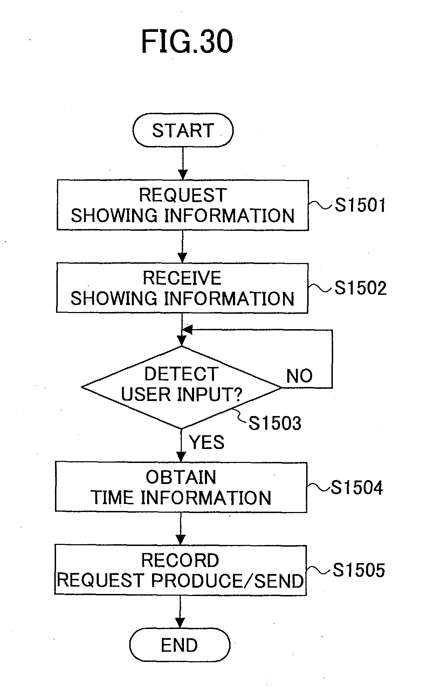

Fig.30 is a first flowchart of the operation of the mobile terminal of the fifth embodiment of the present invention. The first flowchart shows processes until the user requests the center terminal 800 to record information on a preview that the user is interested in.

The mobile terminal requests and receives the showing information from the terminal in showing location 600 in steps 1501 and 1502. Next, the mobile terminal waits for user's input in step 1503. When the mobile terminal detects the user's input, the mobile terminal obtains time information (T) at that time in step 1504. Then, the mobile terminal produces a record request by using the showing content information (C), showing location information (L) and the time information (T) so as to send the request to the center terminal 800 in step 1505.

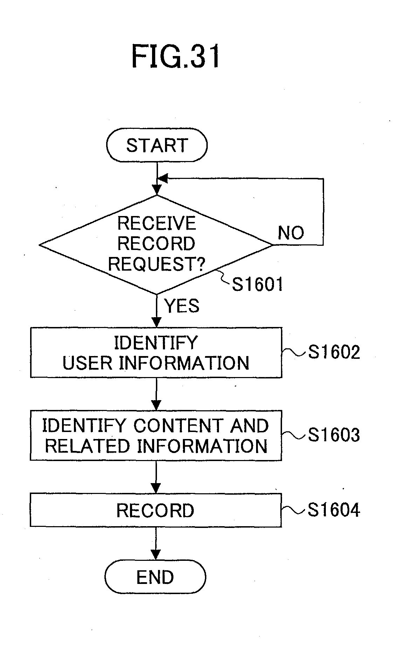

Fig.31 shows a first flowchart of the operation of the center terminal of the fifth embodiment of the present invention. This flowchart shows processes until the center terminal records content information according to the request from the user (mobile terminal 700).

The center terminal waits for receiving the record request (R) from the mobile terminal 700 in step 1601. When receiving the request, the center terminal identifies the user by using the user information (U) in step 1602. Next, the center terminal identifies recorded content information (RC) and identifies the related information (CI) and records information.

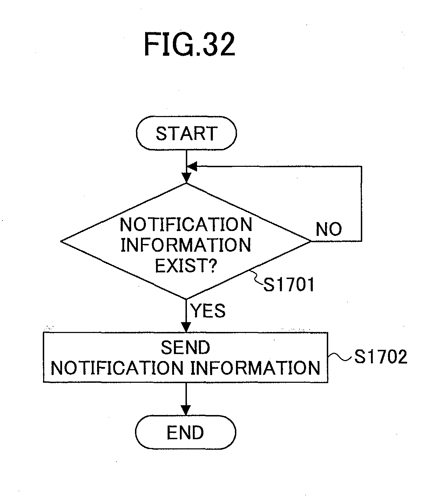

Fig.32 shows a second flowchart of the operation of the center terminal according to the fifth embodiment of the present invention. This flowchart shows processes until the center terminal sends the related information (CI) to the mobile terminal 700.

First, the center terminal 800 periodically checks whether there is information to be sent in step 1701. When there is such information, the center terminal produces notification information by using stored information and sends the notification information to the mobile terminal 700 in step 1702.

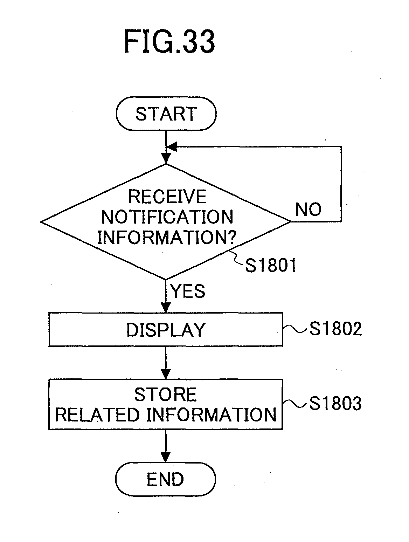

Fig.33 is a second flowchart of the operation of the mobile terminal according to the fifth embodiment of the present invention. This flowchart shows process for receiving the notification information (I) from the center terminal 800.

The mobile terminal 700 waits for receiving the notification information (I) in step 1801. When receiving the notification information (I), the mobile terminal 700 displays the related information (CI) by using the display part 770 in step 1802. Next, the recorded content information storing part 780 stores the related information (CI) and the showing location information (L) in step 1803.

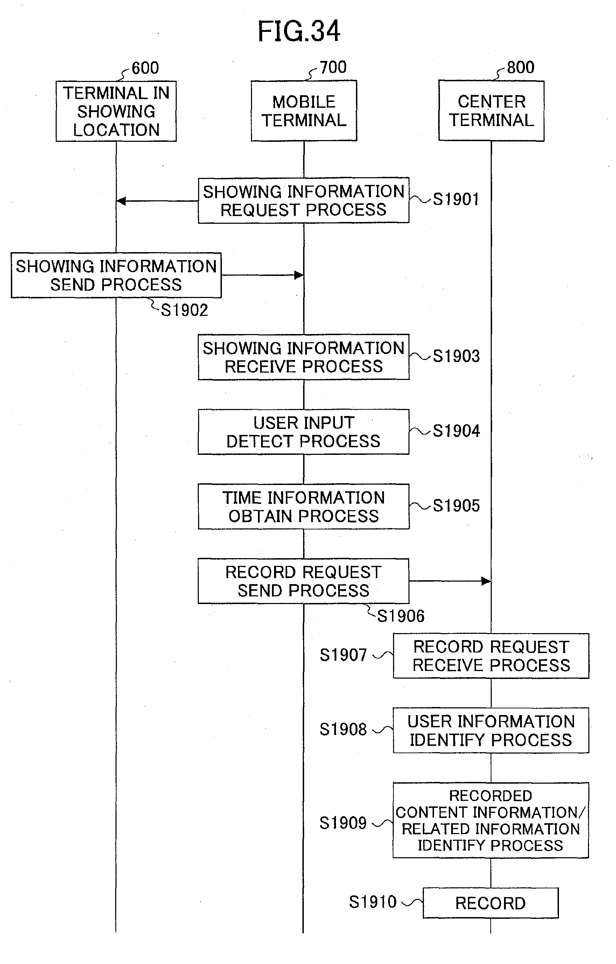

Fig.34 is a sequence chart among the terminal in showing location, the mobile terminal and the center terminal according to the fifth embodiment of the present invention.

First, the mobile terminal 700 requests showing information from the terminal in showing location 600 in step 1901. Then, the terminal in showing location 600 sends the showing content information (C) and the showing location information (L) as the showing information to the mobile terminal 700 in step 1902. The mobile terminal 700 receives the showing information in step 1903. After the user input detection process in step 1904, the mobile terminal performs time information obtaining process in step 1905, and sends a record request to the center terminal 800 by record request producing/sending process in step 1906. The center terminal 800 receives the request in step 1907, and performs user information identification process in step 1908, recorded content information and related information identification process in step 1909, and recording process in step 1910.

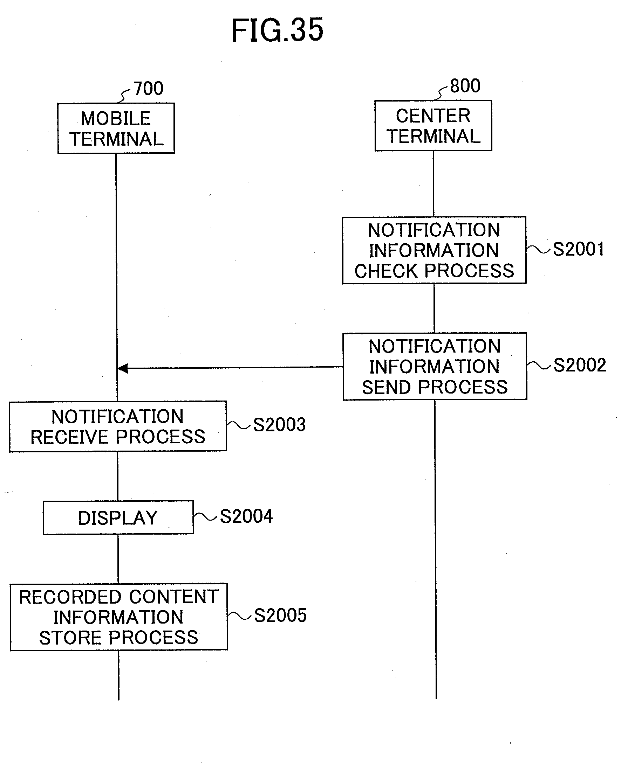

Fig.35 is a sequence chart between the mobile terminal and the center terminal for sending/receiving information on recorded content according to the fifth embodiment of the present invention.

The center terminal 800 checks whether there is information to be notified of to the mobile terminal in step 2001. If such information exists, the center terminal 100 produces the notification information (I) and sends the information (I) to the mobile terminal 700 in step 2002. The mobile terminal 700 receives the notification information (I) in step 2003, and displays the notification information (I) on the display part 770 in step 2004. Then, the mobile terminal 700 stores the notification information in the recorded content information storing part 780 in step 2005.

### [Sixth embodiment]

In this embodiment, a case where the user watches video that is broadcasted via a communication network such as a radio network and the Internet will be described.

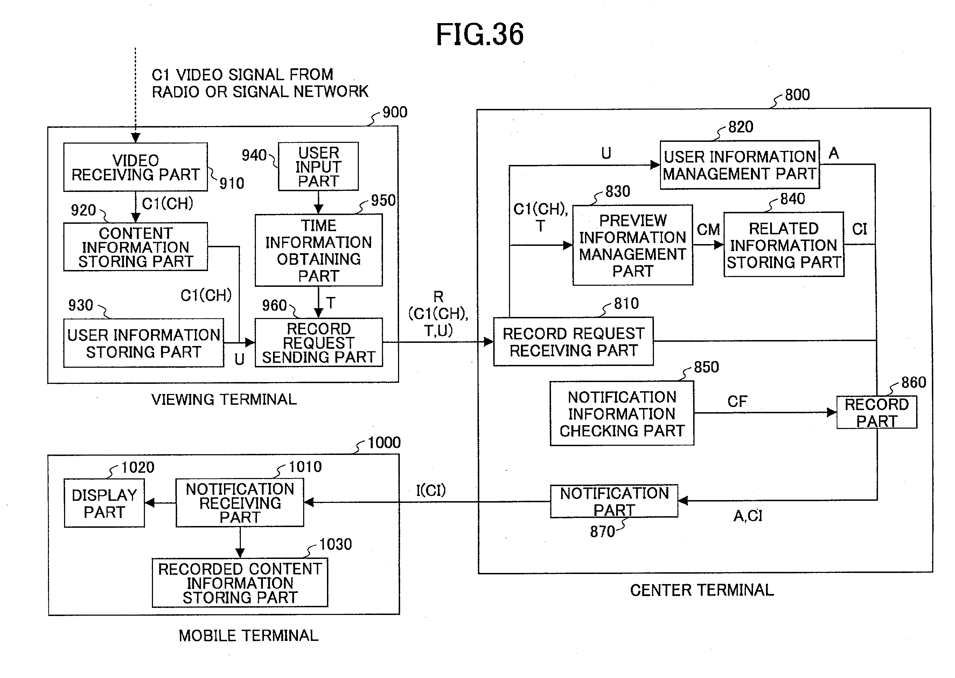

Fig.36 shows a system configuration according to the sixth embodiment of the present invention.

The system shown in the figure includes a viewing terminal 900 by which the user watches the video, a center terminal 800 and a mobile terminal 1000 that receives notification from the center terminal 800. In this embodiment, although the viewing terminal 900 and the mobile terminal 1000 are described separately, these may be configured as one terminal.

The configuration of the viewing terminal 900 is almost the same as that of the mobile terminal in the fifth embodiment. They are different in that the viewing terminal 900 includes a video receiving part 910 and a content information storing part 920.

If the video that the user watches is broadcasted by radio, the video receiving part 910 receives the broadcasted video signal and displays video image. At this time, the video receiving part 910 obtaines a tuned channel number (CH) and passes the channel number to the content information storing part 930. The content information storing part 930 stores the channel number (CH).

If the viewing terminal 900 receives the video from a communication network, the video receiving part 910 receives the video signal and content information (CI) for uniquely identifying the video, in which the content information corresponds to the showing content information of the fifth embodiment. Then, the video is displayed and the video receiving part 910 passes the content information to the content information storing part 930. The content information storing part 930 stores the content information.

After the user input part 940 detects the user input, the time information obtaining part 950 obtains the time information (T). Other parts are the same as those in the fifth embodiment.

The mobile terminal 1000 is the same as the configuration of the fifth embodiment including the notification receiving part 760, the display part 770, the recorded content information storing part 780.

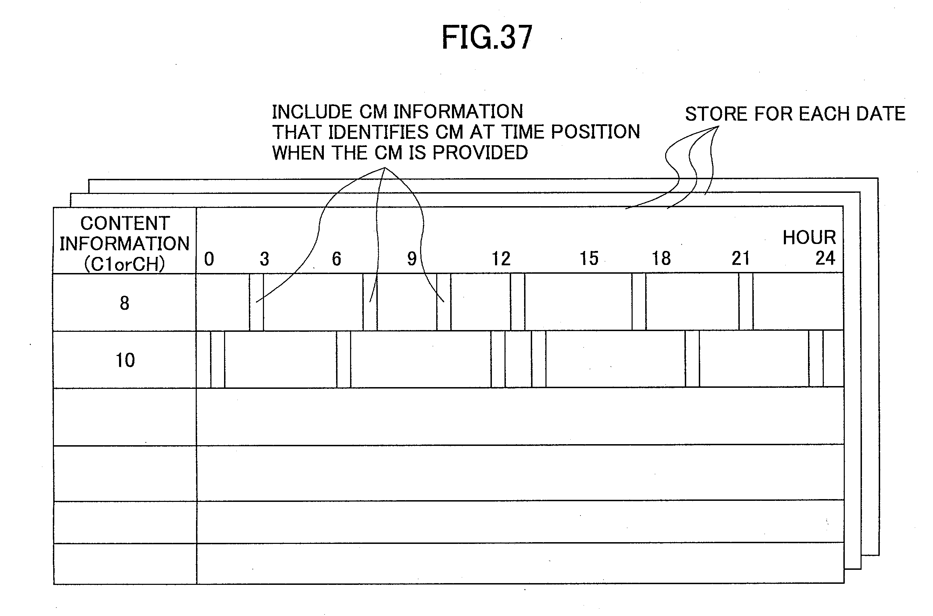

The configuration of the center terminal 800 is the same as that in the fifth embodiment. Data in the preview information management part 830 in the center terminal 800 is data in which time is associated with CM for each channel in the case of radio broadcast or for each destination such as URL in the case of broadcast via the communication network. Fig.37 shows an example of the data. Different from the fifth embodiment, recorded content is not the preview but CM. That is, instead of the recorded content information (RC), CM information (CM) is identified so as to identify related information (CI) by using a table in which CM information (CM) is associated with related information (CI).

The notification time when the CM information is notified of to the user may be determined to be predetermined date and time after the release date and time of the CM information, or user specified date and time. In addition, if the record part 860 indicates that the information is to be sent periodically, the date and time may be determined according to the predetermined date and time. Other processes, and sequences are the same as those of the fifth embodiment.

### [Seventh embodiment]

In this embodiment, content such as a preview that is included in a video program that is recorded in a recording medium such as a DVD.

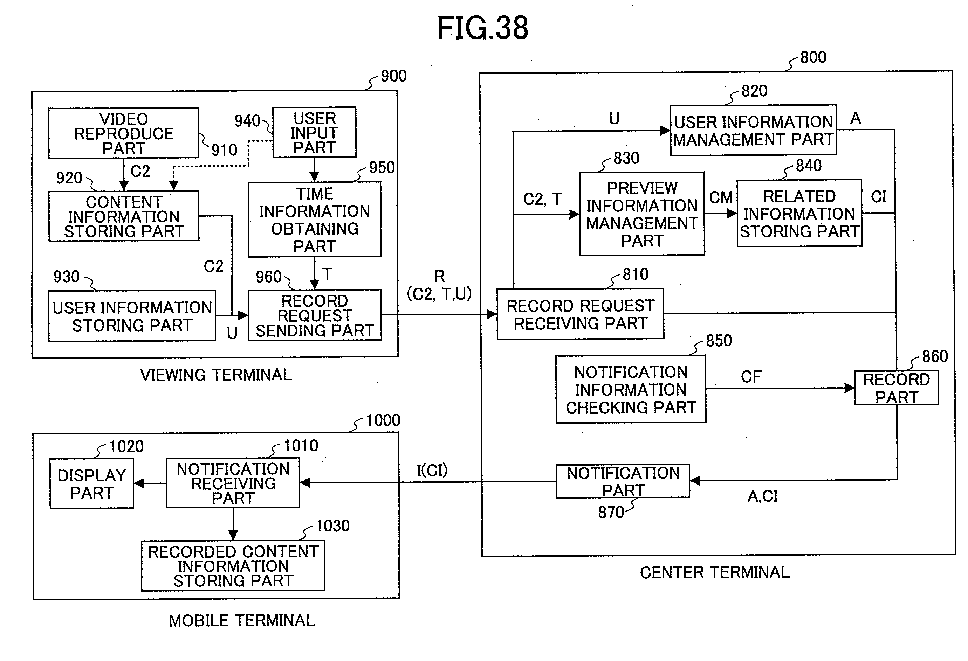

Fig.38 shows the system configuration of the seventh embodiment of the present invention.

The system shown in Fig.38 is almost the same as the sixth embodiment. The viewing terminal 900 has a video reproducing part 970 instead of the video receiving part 910. A recording medium such as DVD can be set into the video reproducing part 970 which reproduces video signal recorded in the medium. In addition, the viewing terminal 900 obtains package information (C2) instead of the content information (C1) of the sixth embodiment. The viewing terminal 900 may obtain the package information (C2) by reading package information (C2) recorded in the recording medium, or by detecting input by the user. The input by the user may be performed by using a keyboard, infrared ray, near field communication, IC chip or the like.

The content information storing part 920 stores the obtained package information (C2).

Time information (T) obtained by the time information obtaining part 950 may be a time relative to the start of the video, or may be a number of a video frame that can identify a potion of the reproduced video.

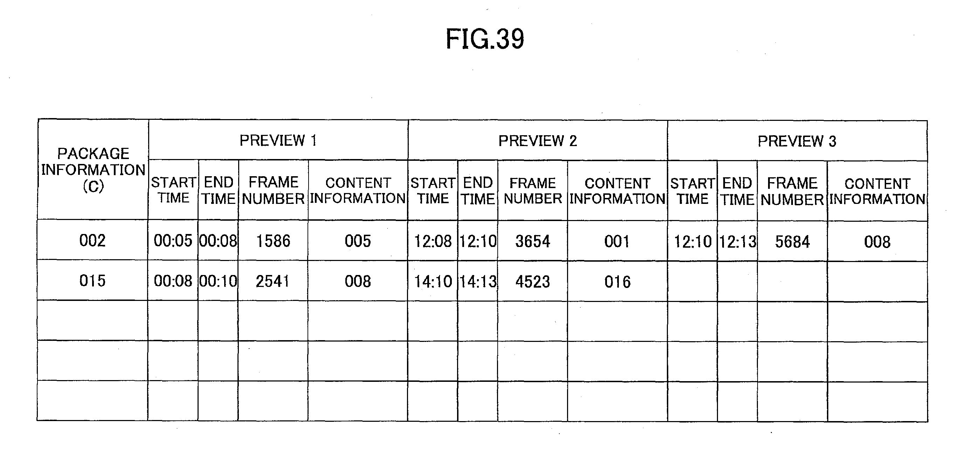

In the center terminal 800, recorded content information (RC) can be identified by using package data (C2) and time information (T) in the data stored in the preview information storing part 830. An example of the data is shown in Fig.39.

The notification time when the CM information for the preview is notified of to the user may be determined to be as a predetermined date and time after the release date and time of the CM information, or user specified date and time. In addition, if the record part 860 indicates that the information is to be sent periodically, the date and time may be determined according to the predetermined date and time.

Components of the center terminal 800 and the mobile terminal 700, and operations and sequences are the same as those of the sixth embodiment.

### [Eighth embodiment]

Next, the eighth embodiment of the present invention will be described.

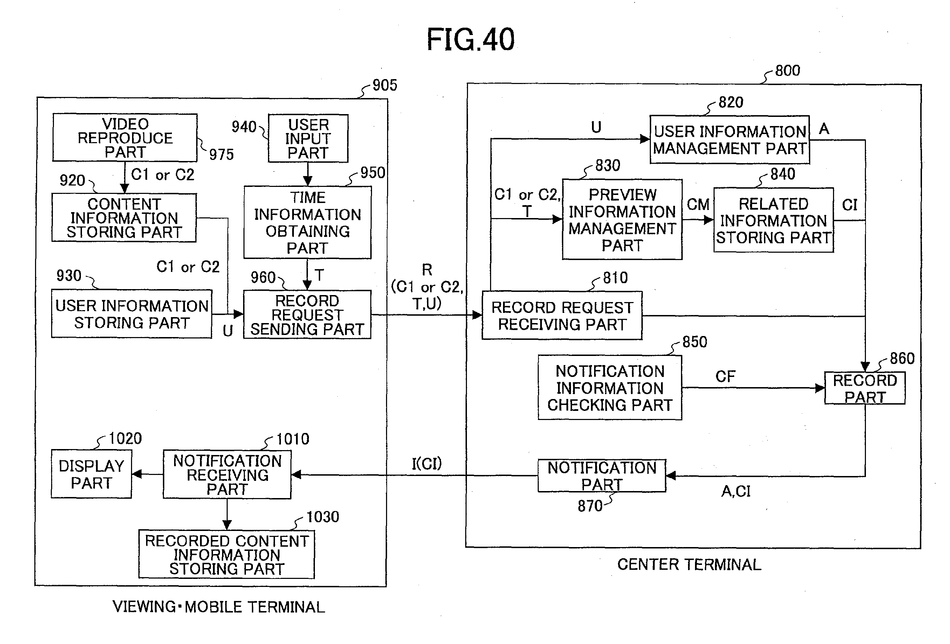

Fig.40 shows a system configuration of the eighth embodiment of the present invention.

The system shown in the figure includes a viewing/mobile terminal 905 in which the viewing terminal 900 and the mobile terminal 1000 in the sixth or seventh embodiment are integrated. The configuration of the center terminal is the same as that of the sixth or seventh embodiment.

The viewing/mobile terminal 905 includes components of the viewing terminal 900 and components of the mobile terminal 1000. The video reproducing part 975 may be called as a video receiving part in the case where the video reproducing part 975 has a capability described in the sixth embodiment. The operation of the system in this embodiment is the same as that of the sixth or seventh embodiment except that the viewing terminal 900 and the mobile terminal 1000 operate as the viewing/mobile terminal 905.

As mentioned above, according to the fifth to eighth embodiments, when the user is interested in advertising content that is associated with video content such as a movie, a TV program or the like, the user can record information on the advertising content only by performing a simple operation. In addition, the information can be sent to the user at a proper timing even if the user forgets about recording the information of the content. Thus, it can be avoided to loose an opportunity to view the recorded content.

As for the provider of the video content, the provider can provide opportunities for the user interested in advertising content to view information at any timing and at the same place.

The information that is recorded is not limited to information on content. The information may be information related to a product, so that the related information of the product can be sent just before the release of the product.

The capabilities of each terminal can be realized by installing a program in a computer from a recording medium such as a CD-ROM, a hard disk drive, a flexible disk and the like. The program can be also installed via a network.

The present invention is not limited to the specifically disclosed embodiments, and variations and modifications may be made without departing from the scope of the present invention.

## Claims

1. An information providing system for providing related information that is related to advertising content associated with video content, the information providing system comprising a user terminal and a center terminal, the user terminal comprising:
a part for obtaining user information for identifying a user;
a part for obtaining content information for identifying the video content;
a part for obtaining locating information for locating advertising content corresponding to input by the user;
a part for sending the user information, the content information and the locating information as mark information;
the center terminal comprising:
an advertising information storing part for storing, for each video content, identification information of advertising content and locating information corresponding to the advertising content;
a storing part for obtaining identification information of advertising content from the advertising information storing part by using the content information and the locating information included in the mark information, and for storing the identification information or related information on the advertising content in which the stored identification information or related information is associated with the user information included in the mark information;
a sending part for sending the related information on the basis of the user information.

2. The information providing system as claimed in claim 1, wherein the center terminal sends the related information to a viewing terminal in response to receiving a viewing request that includes user information from the viewing terminal.

3. The information providing system as claimed in claim 1, wherein the center terminal sends related information corresponding to a user to a viewing terminal of the user at a predetermined notification time.

4. The information providing system as claimed in claim 3, wherein the predetermined notification time is a date and time that is specified by the user or a predetermined periodic date and time, or, if content on the advertising content is unscreened, the predetermined notification time is a date and time close to a release date of the content on the advertising content.

5. The information providing system as claimed in claim 1, the user terminal further comprising a reproducing part for reproducing video content in a package medium or received via broadcasting;
wherein the locating information for locating advertising content is reproducing position information corresponding to the advertising content in the video content.

6. The information providing system as claimed in claim 1, the center terminal further comprising a related information storing part for storing the related information in which the related information is associated with identification information of the advertising content;
wherein the center terminal obtains the related information from the related information storing part by using the identification information of the advertising content.

7. The information providing system as claimed in claim 1, wherein the user terminal obtains the content information for identifying the video content from input by the user, from digital data embedded in the package medium, from other terminal, or from information included in broadcasted information.

8. A center terminal to be used in an information providing system for providing related information that is related to advertising content associated with video content, the center terminal comprising:
a part for receiving user information for identifying a user, content information for identifying the video content and locating information for locating advertising content as mark information;
an advertising information storing part for storing, for each video content, identification information of advertising content and locating information corresponding to the advertising content;
a storing part for obtaining identification information of advertising content from the advertising information storing part by using the content information and the locating information included in the mark information, and for storing the identification information or related information on the advertising content in which the stored identification information or related information is associated with the user information included in the mark information;
a sending part for sending the related information on the basis of the user information.

9. The center terminal as claimed in claim 8, wherein the center terminal sends the related information to a viewing terminal in response to receiving a viewing request that includes user information from the viewing terminal.

10. The center terminal as claimed in claim 8, wherein the center terminal sends related information corresponding to a user to a viewing terminal of the user at a predetermined notification time.

11. The center terminal as claimed in claim 10, wherein the predetermined notification time is a date and time that is specified by the user or a predetermined periodic date and time, or, if content on the advertising content is unscreened, the predetermined notification time is a date and time close to a release date of the content on the advertising content.

12. The center terminal as claimed in claim 8, the center terminal further comprising a related information storing part for storing the related information in which the related information is associated with identification information of the advertising content;
wherein the center terminal obtains the related information from the related information storing part by using the identification information of the advertising content.

13. A user terminal for providing related information that is related to advertising content associated with video content, the user terminal comprising:
a part for obtaining user information for identifying a user;
a part for obtaining content information for identifying the video content;
a part for obtaining locating information for locating advertising content corresponding to input by the user; and
a part for sending the user information, the content information and the locating information as mark information to the center terminal.

14. The user terminal as claimed in claim 13, the user terminal further comprising a part for sending a related information obtaining request that includes user information to the center terminal, and receiving the related information related to the advertising content corresponding to the mark information from the center terminal.

15. The user terminal as claimed in claim 13, the user terminal further comprising a reproducing part for reproducing video content in a package medium or received via broadcasting;
wherein the locating information for locating advertising content is reproducing position information corresponding to the advertising content in the video content.

16. The user terminal as claimed in claim 13, wherein the user terminal obtains the content information for identifying the video content from input by the user, from digital data embedded in the package medium, from other terminal, or from information included in broadcasted information.

17. A method used by an information providing system including a user terminal and a center terminal for providing related information that is related to advertising content associated with video content, wherein the user terminal performs the steps of:
obtaining user information for identifying a user;
obtaining content information for identifying the video content;
obtaining locating information for locating advertising content corresponding to input by the user;
sending the user information, the content information and the locating information as mark information to the user terminal;
the center terminal performs the steps of:
storing, for each video content, identification information of advertising content and locating information corresponding to the advertising content in an advertising information storing part;
obtaining identification information of advertising content from the advertising information storing part by using the content information and the locating information included in the mark information;
storing the identification information or related information on the advertising content in which the stored identification information or related information is associated with the user information included in the mark information;
sending the related information on the basis of the user information.

18. The method as claimed in claim 17, wherein the center terminal sends the related information to a viewing terminal in response to receiving a viewing request that includes user information from the viewing terminal.

19. The method as claimed in claim 17, wherein the center terminal sends related information corresponding to a user to a viewing terminal of the user at a predetermined notification time.

20. The method as claimed in claim 19, wherein the predetermined notification time is a date and time that is specified by the user or a predetermined periodic date and time, or, if content on the advertising content is unscreened, the predetermined notification time is a date and time close to a release date of the content on the advertising content.

21. The method as claimed in claim 17, wherein the user terminal includes a reproducing part for reproducing video content in a package medium or received via broadcasting;
wherein the locating information for locating advertising content is reproducing position information corresponding to the advertising content in the video content.

22. The method as claimed in claim 17, wherein the center terminal includes a related information storing part for storing the related information in which the related information is associated with identification information of the advertising content;
wherein the center terminal obtains the related information from the related information storing part by using the identification information of the advertising content.

23. The method as claimed in claim 17, wherein the user terminal obtains the content information for identifying the video content from input by the user, from digital data embedded in the package medium, from other terminal, or from information included in broadcasted information.

24. A method used in a center terminal for providing related information that is related to advertising content associated with video content, the method comprising the steps of:
storing, for each video content, identification information of advertising content and locating information corresponding to the advertising content in an advertising information storing part;
receiving user information for identifying a user, content information for identifying the video content and locating information for locating advertising content;
obtaining identification information of advertising content from the advertising information storing part by using the content information and the locating information;
storing the identification information or related information on the advertising content in which the stored identification information or related information is associated with the user information; and
sending the related information on the basis of the user information.

25. The method as claimed in claim 24, wherein the center terminal sends the related information to a viewing terminal in response to receiving a viewing request that includes user information from the viewing terminal.

26. The method as claimed in claim 24, wherein the center terminal sends related information corresponding to a user to a viewing terminal of the user at a predetermined notification time.

27. The method as claimed in claim 26, wherein the predetermined notification time is a date and time that is specified by the user or a predetermined periodic date and time, or, if content on the advertising content is unscreened, the predetermined notification time is a date and time close to a release date of the content on the advertising content.

28. The method as claimed in claim 24, wherein the center terminal includes a related information storing part for storing the related information in which the related information is associated with identification information of the advertising content;
wherein the center terminal obtains the related information from the related information storing part by using the identification information of the advertising content.

29. A method used by a user terminal in an information providing system for providing related information that is related to advertising content associated with video content, the method comprising the steps of:
obtaining user information for identifying a user;
obtaining content information for identifying the video content;
obtaining locating information for locating advertising content corresponding to input by the user; and
sending the user information, the content information and the locating information as mark information to the center terminal.

30. The method as claimed in claim 29, wherein the user terminal sends a related information obtaining request that includes user information to the center terminal, and receives the related information related to the advertising content corresponding to the mark information from the center terminal.

31. The method as claimed in claim 29, wherein the user terminal includes a reproducing part for reproducing video content in a package medium or received via broadcasting;
wherein the locating information for locating advertising content is reproducing position information corresponding to the advertising content in the video content.

32. The method as claimed in claim 29, wherein the user terminal obtains the content information for identifying the video content from input by the user, from digital data embedded in the package medium, from other terminal, or from information included in broadcasted information.

33. A program for causing a computer used as a center terminal in an information providing system to provide related information that is related to advertising content associated with video content, the program comprising:
program code means for receiving user information for identifying a user, content information for identifying the video content and locating information for locating advertising content as mark information;
advertising information storing program code means for storing, in a storing part for each video content, identification information of advertising content and locating information corresponding to the advertising content;
program code means for obtaining identification information of advertising content from the storing part by using the content information and the locating information included in the mark information, and storing the identification information or related information on the advertising content in which the stored identification information or related information is associated with the user information included in the mark information;
program code means for sending the related information on the basis of the user information.

34. The program as claimed in claim 33, the program further comprising program code means for sending the related information to a viewing terminal in response to receiving a viewing request that includes user information from the viewing terminal.

35. The program as claimed in claim 33, the program further comprising program code means for sending related information corresponding to a user to a viewing terminal of the user at a predetermined notification time.

36. The program as claimed in claim 35, wherein the predetermined notification time is a date and time that is specified by the user or a predetermined periodic date and time, or, if content on the advertising content is unscreened, the predetermined notification time is a date and time close to a release date of the content on the advertising content.

37. The program as claimed in claim 33, the program further comprising:
related information storing program code means for storing, in a related information storing part, the related information in which the related information is associated with identification information of the advertising content; and
program code means for obtaining the related information from the related information storing part by using the identification information of the advertising content.

38. A program used in a computer that is used as a user terminal in an information providing system for providing related information that is related to advertising content associated with video content, the program comprising:
program code means for obtaining user information for identifying a user;
program code means for obtaining content information for identifying the video content;
program code means for obtaining locating information for locating advertising content corresponding to input by the user; and
program code means for sending the user information, the content information and the locating information as mark information to a center terminal.

39. The program as claimed in claim 38, the program further comprising program code means for sending a related information obtaining request that includes user information to the center terminal, and receiving the related information related to the advertising content corresponding to the mark information from the center terminal.

40. The program as claimed in claim 38, the program further comprising:
reproducing program code means for reproducing video content in a package medium or received via broadcasting;
wherein the locating information for locating advertising content is reproducing position information corresponding to the advertising content in the video content.

41. The program as claimed in claim 38, wherein the program code means for obtaining content information obtains the content information from input by the user, from digital data embedded in the package medium, from other terminal, or from information included in broadcasted information.

42. A computer readable medium storing a program for causing a computer used as a center terminal in an information providing system to provide related information that is related to advertising content associated with video content, the program comprising:
program code means for receiving user information for identifying a user, content information for identifying the video content and locating information for locating advertising content as mark information;
advertising information storing program code means for storing, in a storing part for each video content, identification information of advertising content and locating information corresponding to the advertising content;
program code means for obtaining identification information of advertising content from the storing part by using the content information and the locating information included in the mark information, and storing the identification information or related information on the advertising content in which the stored identification information or related information is associated with the user information included in the mark information;
program code means for sending the related information on the basis of the user information.

43. The computer readable medium as claimed in claim 42, the program further comprising program code means for sending the related information to a viewing terminal in response to receiving a viewing request that includes user information from the viewing terminal.

44. The computer readable medium as claimed in claim 42, the program further comprising program code means for sending related information corresponding to a user to a viewing terminal of the user at a predetermined notification time.

45. The computer readable medium as claimed in claim 44, wherein the predetermined notification time is a date and time that is specified by the user or a predetermined periodic date and time, or, if content on the advertising content is unscreened, the predetermined notification time is a date and time close to a release date of the content on the advertising content.

46. The computer readable medium as claimed in claim 42, the program further comprising:
related information storing program code means for storing, in a related information storing part, the related information in which the related information is associated with identification information of the advertising content; and
program code means for obtaining the related information from the related information storing part by using the identification information of the advertising content.

47. A computer readable medium storing a program used in a computer that is used as a user terminal in an information providing system for providing related information that is related to advertising content associated with video content, the program comprising:
program code means for obtaining user information for identifying a user;
program code means for obtaining content information for identifying the video content;
program code means for obtaining locating information for locating advertising content corresponding to input by the user; and
program code means for sending the user information, the content information and the locating information as mark information to a center terminal.

48. The computer readable medium as claimed in claim 47, the program further comprising program code means for sending a related information obtaining request that includes user information to the center terminal, and receiving the related information related to the advertising content corresponding to the mark information from the center terminal.

49. The computer readable medium as claimed in claim 47, the program further comprising:
reproducing program code means for reproducing video content in a package medium or received via broadcasting;
wherein the locating information for locating advertising content is reproducing position information corresponding to the advertising content in the video content.

50. The computer readable medium as claimed in claim 47, wherein the program code means for obtaining content information obtains the content information from input by the user, from digital data embedded in the package medium, from other terminal, or from information included in broadcasted information.
